(19) Europäisches Patentamt / European Patent Office / Office européen des brevets

(11) **EP 4 127 678 B1**

(12) **EUROPEAN PATENT SPECIFICATION**

(45) Date of publication and mention
of the grant of the patent:
**19.03.2025  Bulletin 2025/12**

(21) Application number: **21717987.8**

(22) Date of filing: **26.03.2021**

(51) International Patent Classification (IPC):
**G01N 21/65** (2006.01)      **G01J 3/44** (2006.01)
**G01J 3/02** (2006.01)

(52) Cooperative Patent Classification (CPC):
**G01N 21/65; G01J 3/027; G01J 3/44;**
G01J 2003/4424

(86) International application number:
**PCT/US2021/024310**

(87) International publication number:
**WO 2021/195471 (30.09.2021 Gazette 2021/39)**

(54) **METHOD FOR SELECTION OF RAMAN EXCITATION WAVELENGTHS IN MULTI-SOURCE RAMAN PROBE**

VERFAHREN ZUR AUSWAHL VON RAMANANREGUNGSWELLENLÄNGEN IN EINER RAMANSONDE MIT MEHREREN QUELLEN

PROCÉDÉ DE SÉLECTION DE LONGUEURS D'ONDE D'EXCITATION RAMAN DANS UNE SONDE RAMAN À SOURCES MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.03.2020  US 202016831611
06.05.2020  EP 20173109
10.03.2021  US 202117198173**

(43) Date of publication of application:
**08.02.2023  Bulletin 2023/06**

(73) Proprietor: **Innovative Photonic Solutions, Inc.
Plainsboro, New Jersey 08536 (US)**

(72) Inventors:
• **CHARACHE, Greg W.
East Windsor, New Jersey 08520 (US)**
• **RUDDER, Scott L.
Hopewell, New Jersey 08525 (US)**

(74) Representative: **Hepp Wenger Ryffel AG
Friedtalweg 5
9500 Wil (CH)**

(56) References cited:
**US-A1- 2008 076 985      US-B1- 10 359 313**

• **LAURA E. MASSON ET AL: "Dual excitation
wavelength system for combined fingerprint and
high wavenumber Raman spectroscopy",
ANALYST, vol. 143, no. 24, 2018, UK, pages 6049 -
6060, XP055759801, ISSN: 0003-2654, DOI:
10.1039/C8AN01989D**

## Description

### Field of the Invention

This invention relates to the field of spectroscopy and more particularly to a compact Raman spectroscopy system and method for providing enhanced quantitative analysis for process control.

### Related Patents

This invention disclosed, herein, is related to that subject matter recited and taught in US 10,359,313 B1.

### Background of the Invention

Raman spectroscopy is a well-known technique that can be used to observe vibrational, rotational and other low-frequency modes in molecules. Raman scattering is an inelastic process whereby monochromatic light typically provided by a laser interacts with molecular vibrations, phonons or other excitations resulting in the energy of the laser photons being shifted up or down. Due to conservation of energy the emitted photon gains or loses energy equal to energy of the vibrational state.

Many Raman measurements suffer from fluorescence, which forces usage of longer wavelength (lower energy) excitation lasers to mitigate against the fluorescent signal overwhelming the Raman signal, thereby making the latter impossible to extract. Usage of longer excitation wavelengths facilitates extraction of Raman signals from fluorescent samples but at a cost of reduced sensitivity in the silicon CCD detectors that capture spectrometer signals.

Known Raman probes that capture a Raman spectra covering the entire range of wavenumbers from 0 $cm^{-1}$ to 4000 $cm^{-1}$ can be accomplished by use of:

(1) a single laser source with a large spectrometer incorporating long sensors to capture photons at all relevant wavenumbers with sufficient resolution;

(2) a single laser source with multiple spectrometers / detectors that each cover a different wavelength range (e.g. silicon and InGaAs);

(3) multiple laser sources with a single spectrometer, or

(4) multiple laser sources with separate spectrometers configured to capture multiple Raman spectra each covering a smaller range of wavenumbers.

Examples of the use of multiple laser techniques are disclosed by:

"Novel Pressure-Induced Molecular Transformations Probed by In Situ Vibrational Spectroscopy", Yang Song,

"Applications of Molecular Spectroscopy to Current Research in the Chemical and Biological Sciences", Mark T. Stauffer (ed.), October 5, 2016. Chapter 8,

"Spatially Compressed Dual-Wavelength Excitation Raman Spectrometer," J.B. Cooper, S. Marshall, R. Jones, M. Abdelkader, and K.L. Wise, Applied Optics, 53, 3333 (2014);

"Dual Wavelength Raman Spectroscopy: Improved Compactness and Spectral Resolution," J. Kiefer, https://www.americanpharmaceuticalreview.com/Featured-Articles/354604-Dual-Wavelength-Raman-Spectroscopy-Improved-Compactness-and-Spectral-Resolution/ posted 16-Oct-2018.

"Raman Fusion Spectroscopy: Multiwavelength Excitation for Compact Devices, J. Kiefer, SciX 2019. (13-18 Oct 2019).

"Apparatus and Method for Composite Raman Multispectral Spectrometry", BRUNEEL, Jean-Luc, BUFFETEAU, Thierry, DAUGEY, Nicolas, RODRIGUEZ, Vincent, WO 2019/220047 A1 (2019) and

US 10,359,313 B1, which is assigned to the Assignee of the instant application.

Each of the referred-to references focuses on capture of multiple Raman spectra using a dual-laser configuration. However, the references fail to disclose the means for selecting wavelengths used in the spectral analysis based on the material selected and the characteristics of the spectrometer utilized. Hence, there is a need in the industry for a compact Raman probe and spectrometer system that provides for improved quantitative analysis using two or more probe laser wavelengths and a method for selecting the laser probe wavelengths to enhance a quantitative analysis of a target material under investigation for different applications.

**Summary of the Invention**

The Raman spectral concatenation concept described herein allows use of a single, relatively compact spectrometer to collect both fingerprint and stretch Raman spectra (i.e., collected Raman wavelengths) and a method for selecting the laser source wavelengths to provide for enhanced quantitative analysis of target material under investigation. In accordance with the principles of the invention, the fingerprint spectrum is captured using one excitation wavelength, whereas the stretch spectrum is captured using a second wavelength selected based on a quantum efficiency of the spectrometer and the first wavelength. The selection of one or more of the laser source wavelengths in the manner disclosed, herein, provides for enhanced signal to noise ratio so as to enhance the performance of a quantitative analysis of a target material under investigation.

A compact dual-wavelength Raman probe configured to provide two or more separate laser wavelengths selected in a manner to provide enhanced quantitative analysis of material under investigation is disclosed.

Described herein are embodiments in which two laser sources may be integrated within the housing of (or internal to) a Raman probe and or external to the housing of a Raman probe.

Described herein are embodiments in which light output emitted by two lasers sources may be combined in a common optical path, wherein the emitted light may be combined using either wavelength beam combining with dichroic mirrors or geometric beam combining.

Described herein are embodiments of a Raman probe utilizing coalignment of the excitation and collection light utilizing a same optical axis.

Described herein are embodiment of a Raman probe utilizing a spatially offset of the excitation and collection lights utilizing separate optical paths.

Described herein are embodiments of a method for selecting the wavelengths of light emitted by two laser sources in a Raman probe wherein the wavelengths of the laser sources or probes are selected in a manner based, in part, on the quantum efficiency of a spectrometer used for the analysis of the light reflected by the target material.

In accordance with the principles of the invention, the wavelengths of the probe lasers used in a dual-wavelength Raman probe are selected based on the quantum efficiency of a spectrometer comprising a single detector array (silicon, InGaAs, or any other detector array) within the spectrometer. The quantum efficiency of a detector is a measure of the ratio of collected to incident photons versus wavelength and is a common characteristic of spectrometers supplied by manufacturers.

The invention is directed to a method for determining a first excitation wavelength and a second excitation wavelength for use in a dual laser spectrometer system. Such system comprises a first laser source configured to emit a first excitation wavelength and a second laser source configured to emit a second excitation wavelength; and a spectrometer configured to receive a first Raman signal and a second Raman signal, wherein said first Raman signal is associated with said first excitation wavelength and said second Raman signal is associated with said second excitation wavelength. Said method comprises

- selecting said first excitation wavelength based on at least one characteristic of a target object, wherein said at least one characteristic is associated with a fluorescence generated by an interaction of the first excitation wavelength with said target object;

- determining a fingerprint region, of the first Raman signal associated with said first excitation wavelength;

- determining a wavelength $\lambda_{QE}$ at which a quantum efficiency of the spectrometer within the fingerprint region assumes a peak value, (which can be done, for example, by determining a peak quantum efficiency value ($\lambda_{QE}$) within the determined range, preferably the fingerprint region, of a quantum efficiency curve, $QE(\lambda)$, associated with said spectrometer, preferably determining a wavelength ($\lambda_{QE}$) at which the quantum efficiency within the range of a quantum efficiency curve $QE(\lambda)$ assumes a peak value, associated with said spectrometer);

- determining a Raman shifted peak of interest ($v_{po1}$) for the target object; and

- determining said second excitation wavelength based on the peak quantum efficiency value wavelength $\lambda_{QE}$ and the

Raman shifted peak of interest $\nu_{poi}$.

Said second excitation wavelength $\lambda p^1$ is determined as:

$$\lambda_p^1 = 1 \ / \ [\nu_{poi} + 1/\lambda_{QE}].$$

Described herein is further a diagnostic system, comprising, optionally, a spectrometer, said spectrometer having a known quantum efficiency; and a Raman probe device configured to provide Raman light wavelengths to the spectrometer, said Raman light wavelengths being generated in response to an excitation light illuminating a target object, wherein said excitation light comprises at least one of a first light comprising a first wavelength, $\lambda_p^2$, and a second light comprising a second wavelength, $\lambda_p^1$, said first excitation wavelength selected based on at least one characteristic of said target object, and said second excitation wavelength determined based on said first excitation wavelength and a wavelength associated with substantially a peak value of said known quantum efficiency.

The diagnostic system may comprise a control unit adapted to determine the second excitation wavelength, preferably adapted to execute the method substantially as described above.

Described herein is a computer programm comprising instructions to cause the system as described above to determine the second excitation wavelength, preferably by executing the method substantially as described above.

The probe laser wavelengths are determined for different applications based on the quantum efficiency of the spectrometer and the material in a target object such that a desired Raman spectra is substantially coincident to a peak of the detector quantum efficiency and, hence, achieving higher signal to noise ratio.

The selection of Raman excitation wavelengths based on the quantum efficiency of the spectrometer allows shifting of both the fingerprint and stretch regions of the Raman spectrum to wavelengths at which silicon detectors (or similar detectors) have relatively high quantum efficiency.

Raman spectra of each of the two laser sources may be captured separately and subsequently concatenated, or stitched together, to provide a single spectral scan encompassing the entire range of data, including the fingerprint and stretch regions, wherein the signal-to-noise ratio of the Raman signal in the stretch region is enhanced.

Analyzing each data set independently is also possible, while collecting the spectra from both excitation wavelengths simultaneously may also be possible.

The compact dual-wavelength Raman probe, disclosed herein, may include optics to configure the output beam of each laser source to have a circular, an elliptical or an elongated cross-section, approximating a shape of a circular or a shape of the elongated emission region of the laser near-field.

The light generated by the laser sources is emitted toward a target object or material under investigation and the resultant scattered signal light is transmitted by the compact Raman probe via an optical beam that may also have a corresponding elliptical cross-section. The excitation and collection paths may be co-linear (i.e., co-aligned) or separate (e.g., spatially-offset (see USPPA 20080076985) or transmission geometry (see USP 8085396)). An optical fiber incorporating a core having dimensions approximating those of the returned scattered light beam, transmits the returned scattered light to the entrance aperture of a spectrometer.

The dual-wavelength Raman probe disclosed herein, the dual-wavelength Raman probe may include external cavity lasers (ECLs) that may be integrated into the probe as wavelength-stabilized laser sources. See, for example, US 9,059,555 B2, "Wavelength-Stabilized Diode Laser". Or may retain the ECLs external to the Raman probe.

A distributed Bragg reflector (DBR) or distributed feedback (DFB) lasers may comprise a wavelength-stabilized laser source that may be integrally incorporated into the Raman probe or may be retained external to the Raman probe.

The light emitted by a laser may be used as the pump source for a non-linear optical (NLO) conversion to produce a different wavelength, e.g., by second-harmonic generation (SHG), third-harmonic generation (THG), or any other non-linear optical process.

In the compact dual wavelength Raman probe, the selection of a second wavelength is based, in part, on a first wavelength and a spectral efficiency of the spectrometer used to collect the Raman signal, as disclosed elsewhere herein.

**Brief Description of Drawings**

For a better understanding of exemplary embodiments and to show how the same may be carried into effect, reference is made to the accompanying drawings. It is stressed that the particulars shown are by way of example only and for purposes of illustrative discussion of the preferred embodiments of the present disclosure and are presented in the cause of providing what is believed to be the most useful and readily understood description of the invention. In this regard, no attempt is made to show structural details of the invention in more detail than is necessary for a fundamental understanding of the invention. The description taken with the drawings making apparent to those skilled in the art how the several forms of the invention may be embodied in practice. In the accompanying drawings:

FIG. 1A illustrates a block diagram of an exemplary embodiment of a dual-wavelength co-aligned/reflective Raman probe using external laser sources.

FIG 1B. illustrates a block diagram of an exemplary embodiment of a dual-wavelength co-aligned/reflective Raman probe using internal laser sources.

FIG. 1C illustrates a block diagram of an exemplary embodiment of a dual-wavelength co-aligned/transmissive Raman probe using external laser sources.

FIG 1D illustrates a block diagram of an exemplary embodiment of a dual-wavelength spatially-offset/transmissive Raman probe.

FIG. 2 illustrates a graphical representation for the selection of laser wavelengths in a dual-wavelength Raman probe in accordance with the principles of the invention.

FIG. 3A illustrates a flow chart of an exemplary process for selecting laser wavelengths in a dual-wavelength Raman probe, in accordance with the principles of the invention.

FIG. 3B illustrates a flow chart of an exemplary process associated with a dual-wavelength Raman probe in accordance with the principles of the invention.

FIGs. 4A and 4B illustrate an exemplary quantum efficiency response of a silicon detector linear array with 300 nm dispersion for two different Raman laser pump sources.

FIGs. 5A and 5B illustrate a second exemplary quantum efficiency response of a silicon detector linear array with 300 nm dispersion for two different Raman laser pump sources.

FIG. 6A illustrates an exemplary spectral analysis of a target material containing cyclohexane, with and without the selection of excitation wavelengths in accordance with the principles of the invention.

FIG. 6B illustrates an expanded section of the spectral analysis shown in FIG. 6A.

FIG. 6C illustrates an exemplary spectral analysis of a target material containing Urea.

FIG. 6D illustrates an exemplary spectral analysis of a target material containing water.

FIG. 7 illustrates a block diagram of an exemplary embodiment of a distance based spatial-offset Raman probe configuration.

FIG. 8 illustrates a block diagram of another embodiment of a spatially offset Raman probe.

FIGs. 9A and 9B illustrate exemplary 1-dimensional and 2-dimensional linear arrays for the transmission of excitation wavelengths and collection of Raman wavelengths

FIGs. 10A-10F illustrate exemplary circular or annular configurations for the transmission of excitation wavelengths and collection of Raman wavelengths.

It is to be understood that the figures and descriptions of the present invention described herein have been simplified to illustrate the elements that are relevant for a clear understanding of the present invention, while eliminating, for purposes of clarity many other elements. However, because these omitted elements are well-known in the art, and because they do not facilitate a better understanding of the present invention, a discussion of such elements is not provided herein. The scope of the invention is defined by the appended claims.

## Detailed Description

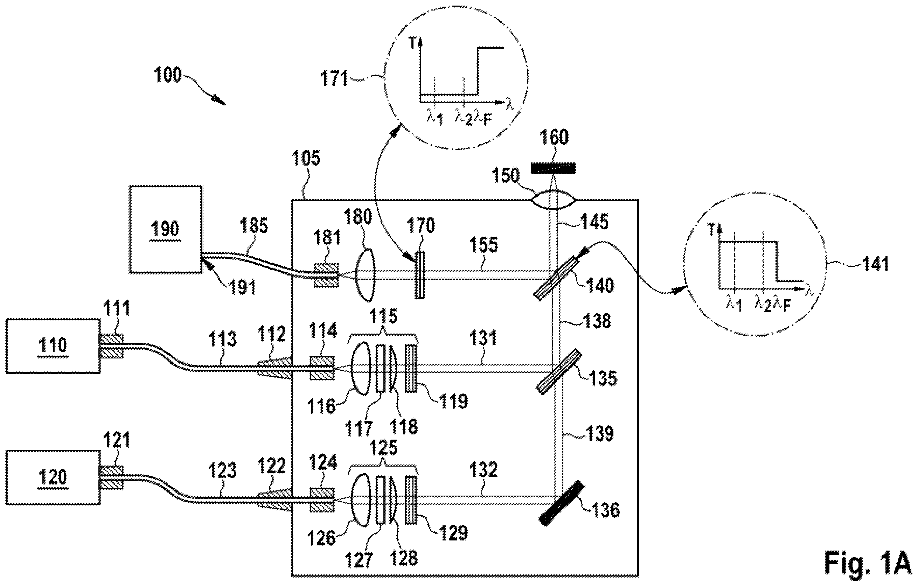

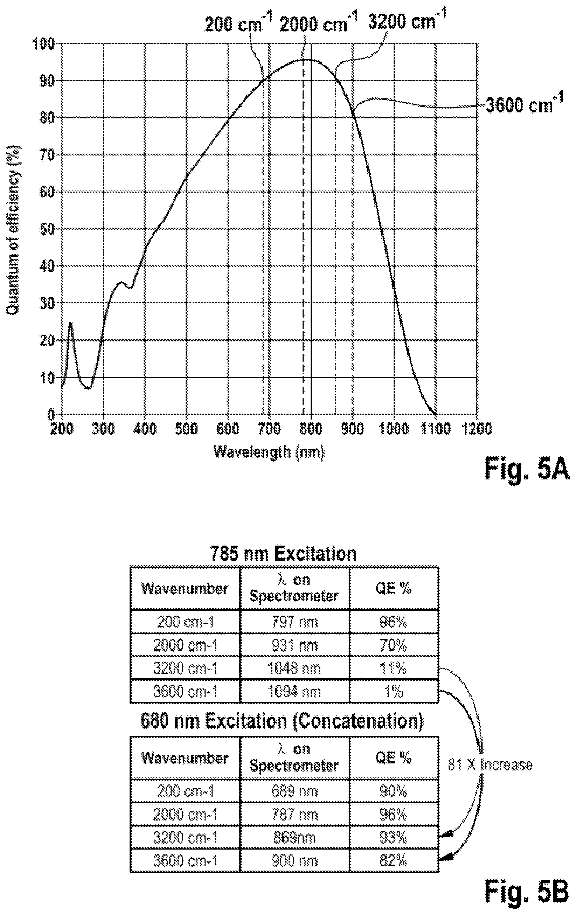

FIG. 1A illustrates a block diagram of an exemplary embodiment of a compact dual-wavelength co-aligned/reflective Raman probe configuration where the light outputted by corresponding ones of the illustrated two laser sources are combined along a same optical path using wavelength beam combining with a dichroic mirror, which is similar to the configuration shown in, and disclosed with regard to FIG. 5 of US 10,359,313 B1, which discloses the use of diode lasers as the light sources in Raman spectroscopy.

In this exemplary embodiment, a dual wavelength Raman probe 100 includes a housing 105 and two external light sources 110 and 120, (hereinafter referred to as lasers or laser sources. However, it would be recognized that the light sources 110 and 120 may similarly be non-lasing sources, e.g., a super luminescent diode) coupled via optical fibers 113 and 123, respectively, to the internal optics within housing 105. The lasers 110 and 120 may emit light in a single spatial mode or in multiple spatial modes. Optical couples 111, 112, 121, and 122 are known devices for coupling optical fibers to equipment or devices.

The laser sources 110 and 120 may be any laser device or system; preferably laser sources 110 and 120 are wavelength-stabilized laser sources having narrow bandwidth.

One class of lasers that may be used as a wavelength-stabilized laser source is an external cavity laser. See, for example, US 9,059,555 B2 and US 9,577,409 B1, which are assigned to the assignee of the instant application, and describe exemplary external wavelength stabilized diode lasers. Sources 110, 120 may also be semiconductor lasers that incorporate gratings within their structure, such as a distributed feedback (DFB) or distributed Bragg reflector (DBR) laser.

Laser sources 110, 120 may also be a DFB or DBR laser coupled to a non-linear optical element for second- or third-harmonic generation of shorter wavelength laser light, as is well-known in the art.

The compact dual-wavelength Raman probe 100 further includes optics 115, 125 to configure the output beam of the laser sources 110, 120. Exemplary components shown in FIG. 1A, are lenses 116, 117, and 118 (optics 115) to reshape the optical beam associated with laser 110 to form, for example, a beam cross-section suitable for exciting Raman signal (or wavelengths) by a target of interest, 160, and corresponding components 126, 127, and 128 (optics 116) to reshape the optical beam associated with laser 120. Narrow-band filters 119 and 129 reject spontaneous emission from the outputs of lasers 110 and 120.

Collimated light beams 131 and 132 are combined into a single collimated beam 138 by use of a first dichroic mirror 135 and reflecting mirror 136, wherein mirror 136 redirects light beam 132 towards first dichroic mirror 135. First dichroic mirror 135 further passes light beam 132 and redirects light beam 131 to form collimated beam 138.

A single short pass filter (not shown). with cut-off wavelength designed to pass the wavelengths emitted by the first laser 110 and the second laser 120 but blocks wavelengths beyond the longer of the two wavelengths (i.e., light beams 131, 132) may be placed after the light beams 131, 132 are combined into collimated beam of light 138.

The probe (excitation, illumination) light beam 138 is transmitted through a second short-pass dichroic mirror 140, with transmission characteristics schematically depicted in inset 141, to lens 150 which focuses the combined light, comprising the wavelengths emitted by the first laser 110 and the second laser 120 onto the target object 160 along light path 145.

Light scattered from the target object 160 will include Raman, Rayleigh and fluorescent components, which may be collected by lens 150 and directed back towards the second dichroic mirror 140 through light path 145. In this illustrated case, dichroic mirror 140 is configured to reflect the longer Stokes-shifted Raman photons into collimated beam 155. Light at wavelengths longer than the filter cutoff, including at the two excitation wavelengths, will, to a great extent, pass through second dichroic mirror 140 and be largely eliminated from beam 155.

Additional optical elements (not shown) may be included in the light path of light beam 138 to shape light beam 138. For example, light beam 138 may be shaped into a circular beam such that the light beam 138 (i.e., combined first excitation wavelength and second excitation wavelength) forms an annular region on said target object 160. The optical elements may be configured to adjust a diameter of the annular region projected onto the target object. The additional optical elements (not shown) may be included the light path of light beam 138 to shape light beam 138 into an elliptical or elongated shape.

The spatial extent of the excitation light on the target 160 may be sufficiently long to give rise to off-axis scattered light, which may result in the reflection of a range of wavelengths - including those that would be preferentially excluded - by the second dichroic mirror 140 into beam 155. The design of dichroic mirror 140 preferably is such that unwanted light is eliminated as much as is possible.

Dichroic mirror 140 may be an edge filter that is designed to direct wavelengths of the Raman scattered light toward spectrometer 190, along a single optical fiber or axis (i.e., co-aligned), while substantially removing other light near the pump wavelengths.

In an embodiment of the invention disclosed in which the Stokes signal wavelength is to be detected, the dichroic mirror 140 is a short-pass filter that reflects wavelengths longer than that of the pump wavelength and substantially removes wavelengths at and shorter than the pump wavelengths from optical beam 155, as shown.

In an embodiment of the invention disclosed, in which anti-Stokes signals are to be detected, the dichroic mirror 140 is a long-pass filter that reflects wavelengths shorter than that of the pump wavelength and substantially removes wavelengths at and longer than the pump wavelengths from optical beam 155.

Dichroic mirror 140 is typically used at a 45☐ angle of incidence and, in the embodiment shown in FIG. 1A, transmits light from the laser sources 110 and 120 towards the target 160 under investigation. Exemplary dichroic mirror are Semrock's RAZOREDGE beamsplitters. RAZOREDGE is a registered Trademark of IDEX Health & Science LLC, Rohnert Park, California.

For detection of Stokes signals, long-pass dichroic filter 170 is designed to transmit wavelengths longer than its cutoff wavelength, as shown in inset 171. Lens 180 focuses the filtered light onto the entrance facet of optical fiber 185, which transmits the light to slit 191 of a compact spectrometer 190.

The filter 170 may be one of: a dichroic filter, a volume holographic grating filter, and a fiber Bragg grating filter, used in combination with focusing and collection optics or any filter that provides the required wavelength-dependent blocking and transmitting capabilities. Exemplary filters include STOPLINE□ single notch filters and RAZOREDGE® ultra-steep long-pass edge filters for Stokes detection and ultra-steep short-pass edge filter for anti-Stokes detection. STOPLINE and RAZOREDGE are registered Trademarks of IDEX Health & Science LLC, Rohnert Park, California.

Spectrometer 190 is designed to diffract light input through slit 191 to a linear silicon detector array (not shown). The range of light diffracted onto the array is limited by the design of the spectrometer's diffraction grating and linear extent of the detector array as is well-known in the art. Accordingly, a spectrometer's grating and detector may be configured so that the detector receives a limited range of wavelengths, e.g., approximately 791 nm to 934 nm for Stokes signals. An exemplary 2048-element linear detector may have a resolution of approximately 1 cm-1 (i.e., 1 wavenumber, wherein wavenumber is a term of art within the optical field) in both the fingerprint and stretch regions of the spectrum if detected separately.

In another embodiment of the invention, the light from lasers 110 and 120 of FIG. 1A may be combined onto a single fiber (not shown) before being presented to dichroic mirror 140. The elements generating and combining the light from lasers 110 and 120 need not be contained within the body 105 and instead may be combined outside of the body 105 by means of either geometric or dichroic combination and subsequently combined into a single fiber before being presented to the dichroic mirror 140.

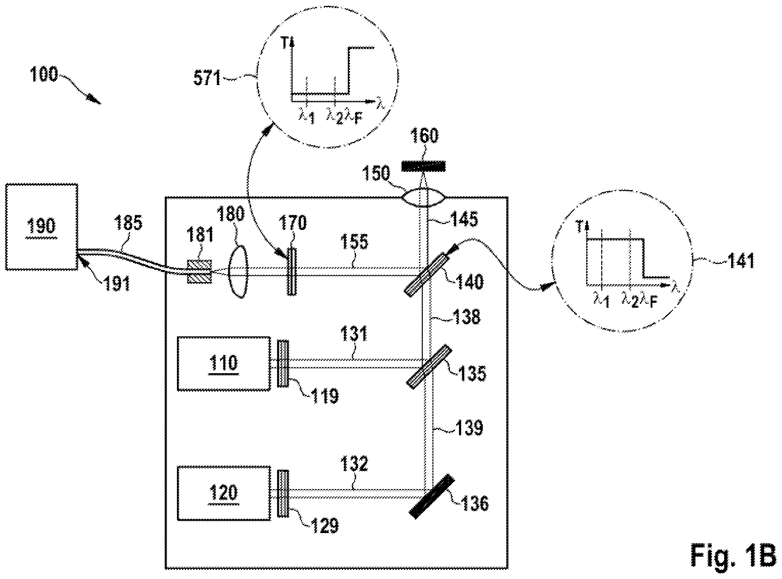

FIG. 1B illustrates an exemplary embodiment of a dual-laser co-aligned/reflective Raman probe, wherein the laser sources 110, 120 are incorporated within the Raman probe housing 105. In this second exemplary embodiment of a dual-laser Raman probe, the elements (components) and operation of the Raman probe shown in

FIG. 1B are similar to the elements and operation discussed with regard to the dual-wavelength Raman probe shown in FIG. 1A. As both the components and the operation of the configuration shown in FIG. 1B are similar to the components and operation of the dual-laser Raman probe shown in FIG. 1A, the details of the components and operation of the configuration shown in FIG. 1B would be understood by those skilled in the art from a reading of the components and operation of FIG. 1A and, thus, further discussion of FIG. 1B is believed not needed.

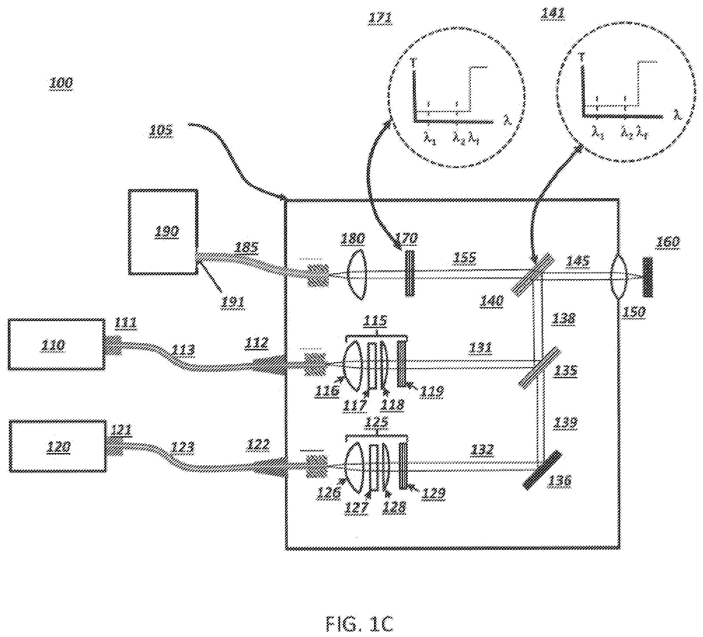

FIG. 1C illustrates an exemplary embodiment of a dual-laser co-aligned Raman/transmissive probe with a Raman probe wherein where the light outputted by external lasers sources 110, 120, are combined into a single optical beam 138 using wavelength beam combining with a dichroic mirror 135 and reflective mirror 136, as previously discussed. In this third exemplary embodiment, the second dichroic filter, 140, functions to direct the excitation light of the laser sources on to target object 160 through lens 150. Lens 150 further collects, and transmits to dichroic filter 140, the Raman wavelengths generated in response to an interaction of the excitation wavelengths. Dichroic filter 140 then transmits the collected Raman light, as optical beam 155, to filter 170. In this case, filter 170, operates to remove the light of laser sources 110 and 120 from being presented to slit 191 of spectrometer 190.

In this third exemplary embodiment of a dual-laser Raman probe, the remaining elements (components) and operation shown in FIG. 1C are similar to the elements and operation discussed with regard to the dual-wavelength Raman probe shown in FIG. 1A. As both the components and the operation of the configuration shown in FIG. 1C are similar to the components and operation of the dual-laser Raman probe shown in FIG. 1A, the details of the components and operation of the configuration shown in FIG. 1C would be understood by those skilled in the art from a reading of the components and operation of FIG. 1A and, thus, further discussion of FIG. 1C is believed not needed.

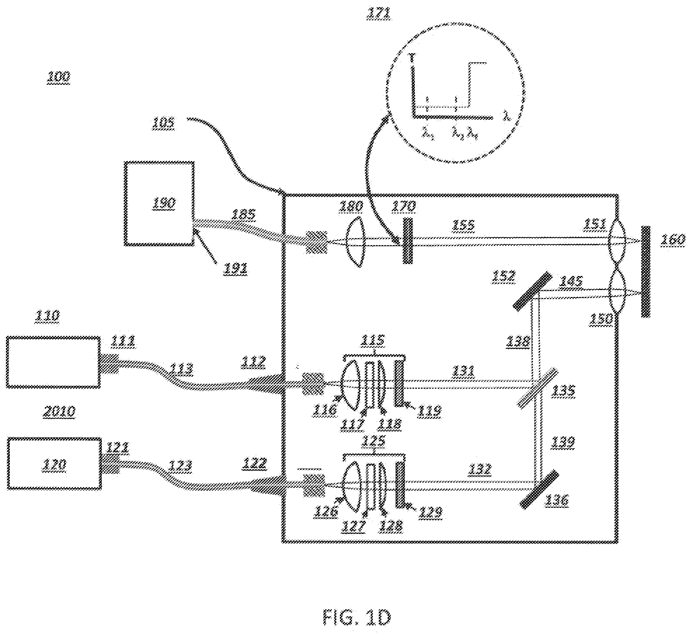

FIG. 1D illustrates an exemplary embodiment of a dual-laser spatially-offset / transmissive Raman probe where the light outputted by two external laser sources 110, 120 is combined along a same optical path using wavelength beam combining with a dichroic mirror 135 and mirror 136 as previously discussed. The combined light 138 is then directed by mirror 152 through focusing lens 150 onto target object 160. Collection lens 151 collects the Raman light generated in response to the illumination of the target object 160 with the combined excitation (or illumination light) light 138 and directs the collected Raman light, i.e., light beam 155, to filter 170, which operates to remove the excitation wavelengths from the collected Raman light, as previously discussed.

In this fourth exemplary embodiment of a dual-laser Raman probe, the remaining elements (components) and operation shown in FIG. 1D are similar to the elements (components) and operation discussed with regard to the dual-wavelength Raman probe shown in FIG. 1A. As both the remaining components and the operation of the configuration shown in FIG. 1D are similar to the remaining components and operation of the dual-laser Raman probe shown in FIG. 1A, the details of the remaining components and operation of the configuration shown in FIG. 1D would be understood by those skilled in the art from a reading of the components and operation of FIG. 1A and, thus, further discussion of FIG. 1D is believed not needed.

The invention further relates to a diagnostic system, comprising a spectrometer, said spectrometer comprising a known quantum efficiency, and a Raman probe device configured to provide Raman light wavelengths to said spectrometer, said Raman light wavelengths being generated in response to an excitation light illuminating a target object, wherein said excitation light comprises at least one of a first light comprising a first excitation wavelength, $\lambda_p^2$ and a second light comprising a second excitation wavelength, $\lambda_p^1$, said first excitation wavelength selected based on a fluorescence generated by an interaction of the first excitation wavelength with said target object (this fluorescence can be regarded as at least one characteristic of said target object) and said second excitation wavelength determined based on a wavelength $\lambda_{QE}$ at which a quantum efficiency of said spectrometer within the fingerprint region defined by the first excitation wavelength assumes a peak value and a Raman shifted peak of interest $\nu_{POI}$ for the target object. Therefore, the second excitation wavelength is based on said first excitation wavelength and a wavelength associated with substantially a peak value of said known quantum efficiency.

Said second excitation wavelength is determined as:

$$\lambda_p^1 \ = \ 1 \ / \ [\nu_{poi} \ + \ 1/\lambda_{QE}];$$

$\lambda_p^1 = 1 / [\nu_{poi} + 1/\lambda_{QE}]$ ; wherein $\lambda_{QE}$ is said wavelength associated with substantially said peak of said quantum efficiency within a range defined by the first excitation wavelength; and $\nu_{poi}$ is the Raman shifted peak of interest for the target object. More precisely, $\nu_{poi}$ is the wavenumber of a Raman shifted peak of interest, given in the same dimensions as $1/\lambda_{QE}$. Preferably, the Raman shifted peak of interest ($\nu_{poi}$) is a stretch peak emitted by the target object upon irradiation with the first laser light at the first excitation wavelength.

The system further comprises a control unit that is adapted to determine the second excitation wavelength by executing the method according to the invention as described elsewhere herein.

In a preferred embodiment, within the system as described above said Raman probe comprises a first lens configured to focus said first light and said second light onto said target object; and a filter configured to pass said Raman light wavelengths and to block said first wavelengths and said second wavelengths from passing to said spectrometer.

In a preferred embodiment, within the system as described above, said first lens is configured to collect said Raman light wavelengths and provide said collected Raman light wavelengths to said filter.

In a preferred embodiment, the system as described above comprises a second lens, said second lens configured to collect said Raman light wavelengths, and to provide said Raman light wavelengths to said filter.

In a preferred embodiment, the system comprises an optical device comprising: at least one optical fiber configured to receive said excitation light; and to direct said received excitation light to said target object; and a plurality of optical fibers configured to receive said Raman light wavelengths and to direct said received Raman light wavelengths to said second lens.

In a preferred embodiment, the system comprises a mask, wherein said mask prevents selected ones of said plurality of optical fibers receiving said Raman light wavelengths from receiving said Raman light wavelengths.

In a preferred embodiment, within the system as described above, said optical device comprises: a plurality of optical fibers arranged in one of: a 1-dimensional array of optical fibers and a 2-dimensional array of optical fibers.

In a preferred embodiment, within the system as described above, said optical device comprises a plurality of optical fibers arranged annularly about a center optical fiber, wherein said center optical fiber is one of: said transmissive optical fiber and said receptive optical fiber.

Within the system as described above, said at least one characteristic of the target object is associated with a fluorescence generated by said target object when illuminated by said first excitation wavelength. The first excitation wavelength is selected such as to minimize the impact of fluorescence on the Raman spectral signal.

Said first light and said second light may be emitted concurrently. Said first excitation wavelength and said second excitation wavelength may be emitted sequentially.

In a preferred embodiment, the system as described above comprises a first laser configured to generate said first light, wherein said first laser is one of: internal to said Raman probe and external to said Raman probe device; and/or a second laser configured to generate said second light, wherein said second laser is one of: internal to said Raman probe and external to said Raman probe device.

This disclosure further relates to Raman probe device comprising a first lens, said first lens configured to receive at least one of: a first excitation wavelength $\lambda_p^2$, said first excitation wavelength determined based on at least one characteristic of a target object, and a second excitation wavelength $\lambda_p^1$; and said first lens configured to focus said at least one of said first excitation wavelength and said second excitation wavelength onto said target object, wherein a Raman wavelength is generated in response to said target object being illuminated by a corresponding one of at least one of said first excitation wavelength and said second excitation wavelength; and wherein the Raman probe device further comprises a filter, said filter configured to pass said Raman wavelength generated in response to said target object being illuminated by a corresponding one of at least one of said first excitation wavelength and said second excitation wavelength, to a spectrometer; and wherein said spectrometer comprises a known quantum efficiency and said second excitation wavelength is determined as: $\lambda_p^1 = 1 / [v_{poi} + 1/\lambda_{QE}]$ ; wherein $\lambda_{QE}$ is a wavelength associated with a peak of said quantum efficiency within a range defined by the first excitation wavelength; and $v_{poi}$ is the Raman shifted peak of interest for the target object.

In a preferred embodiment of the Raman probe as described above, said first lens is configured to collect said Raman wavelength and to present said collected Raman wavelength to said filter.

In a preferred embodiment, the Raman probe as described above comprises a second lens, said second lens configured to collect said Raman wavelength and to present said collected Raman wavelength to said filter.

In a preferred embodiment, the Raman probe as described above comprises a first laser source configured to emit said first excitation wavelength; and a second laser source configured to emit said second excitation wavelength, wherein at least one of said first laser source and said second laser source is external to said Raman probe. Alternatively, at least one of said first laser source and said second laser source may be internal to said Raman probe.

In a preferred embodiment of the Raman probe as described above, said first excitation wavelength and said second excitation wavelength are emitted one of: concurrently and sequentially.

In a preferred embodiment, the Raman probe as described above comprises an optic device comprising a plurality of optical fibers, wherein selected ones of said optical fibers receive said first excitation wavelength and said second excitation wavelength; and selected ones of said optical fibers receive said Raman light wavelengths.

In a preferred embodiment of the Raman probe as described above, said plurality of optical fibers are arrange in one of a matrix configuration and an annular configuration.

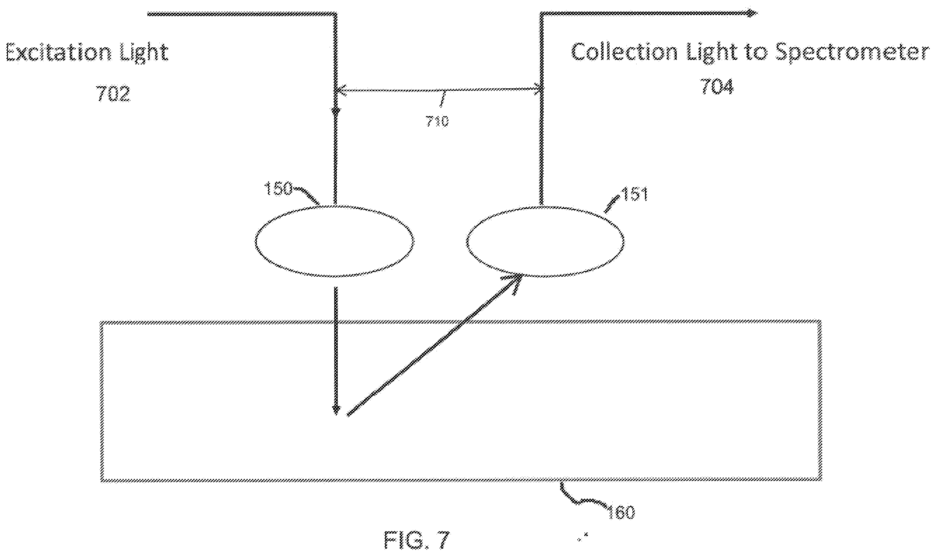

FIG. 7 illustrates a block diagram of an exemplary embodiment of a distance based spatial-offset Raman probe configuration, wherein the spatial separation (or distance) 710 between the excitation light wavelengths 702 and the collected light wavelengths 704 allows for the detection of sub-surface regions of target object 160. Hereafter, the combined light 138 comprising first excitation wavelength 210 and second excitation wavelength 220 shall be referred to as excitation light 702 and the Raman light wavelengths shall be referred to as collected light wavelengths 704. By increasing a distance 710 between the excitation light wavelengths 702 and collected light wavelengths 704 regions below a surface of target object 160 may be observed.

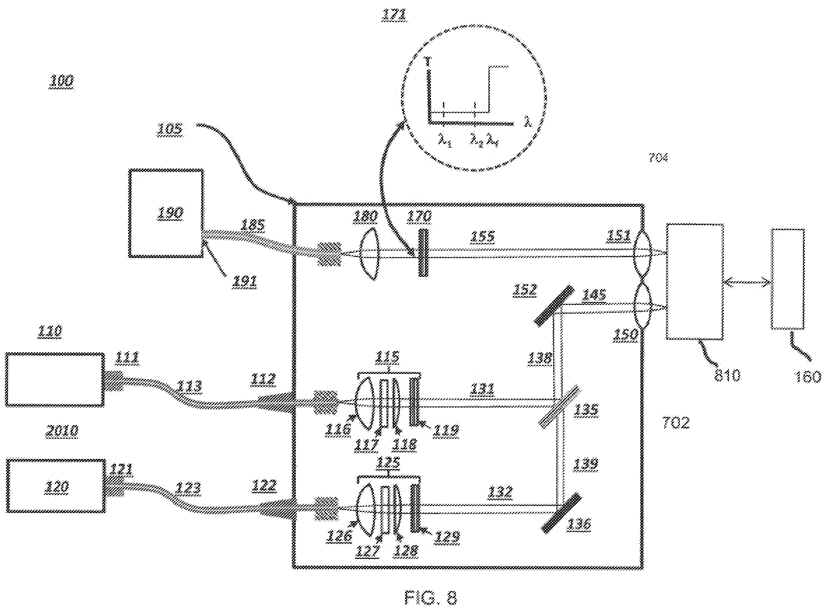

FIG. 8 illustrates a block diagram of a second embodiment of a distance based spatially oriented Raman probe. In this illustrated embodiment, which is similar to the embodiment shown in FIG. 1D, further includes optical device 810, which is in optical communication with lenses 150 and 151. In this second embodiment, light (or excitation wavelengths) emitted by lens 150 are directed to optical device 810 through an optically clear material (e.g. optical fibers) and Raman light 704, generated in response to excitation light 702 illuminating target object 160, may be collected by optical device 810 and provided to collection lens 151 through a second set of optically clear material (e.g., optical fibers).

For example, optical device 810 may comprise an optical probe that may be used to scan target object 160 while emitting excitation wavelengths 702 and collecting Raman wavelengths 704. The tip of optical probe may include an optically clear material (e.g., plurality of optical fibers) that receive excitation wavelengths from lens 150 and a second, separate, optically clear material (e.g., optical fibers) that collect Raman light wavelengths and provide the collected Raman wavelengths to collection lens 151. Alternatively, optical device 810 may be a stationary device that includes a platform on to which target object may be placed or contained. Optical device 810 may include a plurality of optical fibers, for example, that receive excitation wavelengths 702 and a second plurality of optical fibers, for example, that collect Raman light wavelengths 704 and provide the collected Raman light wavelengths to collection lens 151. In addition, the first set of optical fibers and the second set of optical fibers may be orientated as shown in FIG. 7, for example. In another embodiment, the first set of optical fibers may be oriented such that the excitation wavelength 702 is projected onto target object 160 at an angle and the second set of optical fibers may be oriented at an angle with respect to target object 160. In still another embodiment, the first set of optical fibers (or clear material) may be positioned on one side of target object 160 and the second set of optical fibers may be positioned on a second side of target object 160.

Although optical device 810 is shown external to housing 110, it would be recognized that optical device 810 may be internal to housing 110.

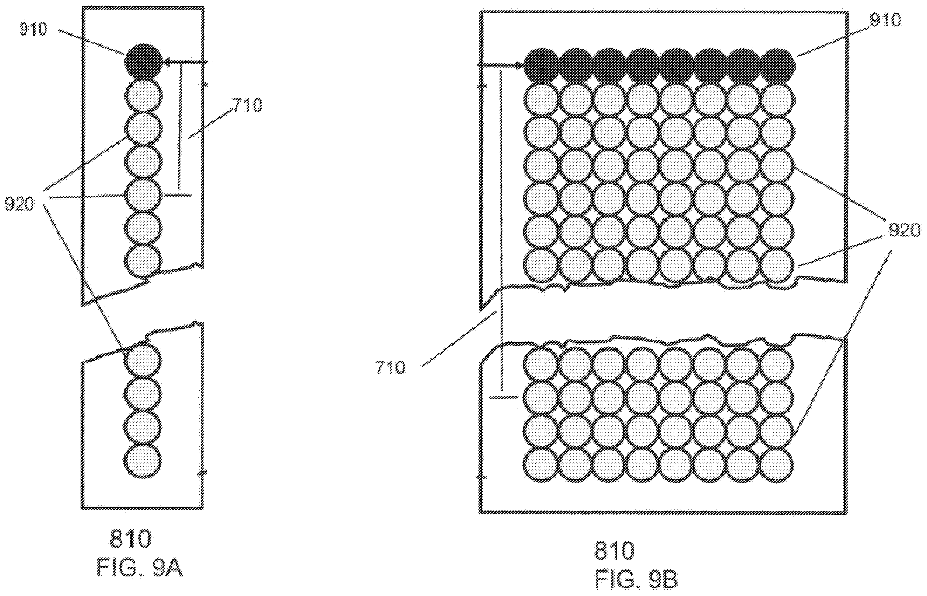

FIG. 9A illustrates a first exemplary embodiment of optical device 810 wherein a first set of a plurality of optical fibers (or other optically clear material) 910, and a second set of optical fibers 920 are arranged in a 1-dimensional array. In this exemplary embodiment, optic fibers 910 represent a transmissive device that may be used to provide excitation wavelengths or light 702 to target object 160 while optical fiber 920 represent a receptive device that may be used to collect Raman light or wavelengths 704 and provide the collected light to collection lens 151 (see FIG. 8).

Spatial distance 710 between the excitation wavelengths 702 and the Raman wavelength 704 may be varied, for example, by utilizing different ones of collection fibers 920.

FIG. 9B illustrates a second example of optical device 810, which includes a two-dimensional array comprising a first and second sets of optical fibers 910, 920 are arranged in a matrix.

As with the arrangement shown in FIG. 9A, excitation wavelengths or light 702 may be provided to target object 160 through fibers 910, while Raman light 704 may be collected through optical fibers 920.

In this illustrated embodiment, spatial distance 710 may be measured horizontally, vertically or diagonally with respect to the transmissive fibers and the receptive fibers.

A mask may be utilized to limit the number of receptive devices receiving the Raman light wavelengths. The mask may be used for determining a minimum separation (or maximum separation distance). Returning to FIG. 9A, a mask (not shown) may be positioned between the second and fifth rows of receptive fiber optic cables, 920 to establish a minimum separation distance between the transmissive fiber optic cable 910 and the receiving fiber optic cables 920. Accordingly, the separation distance may be made variable.

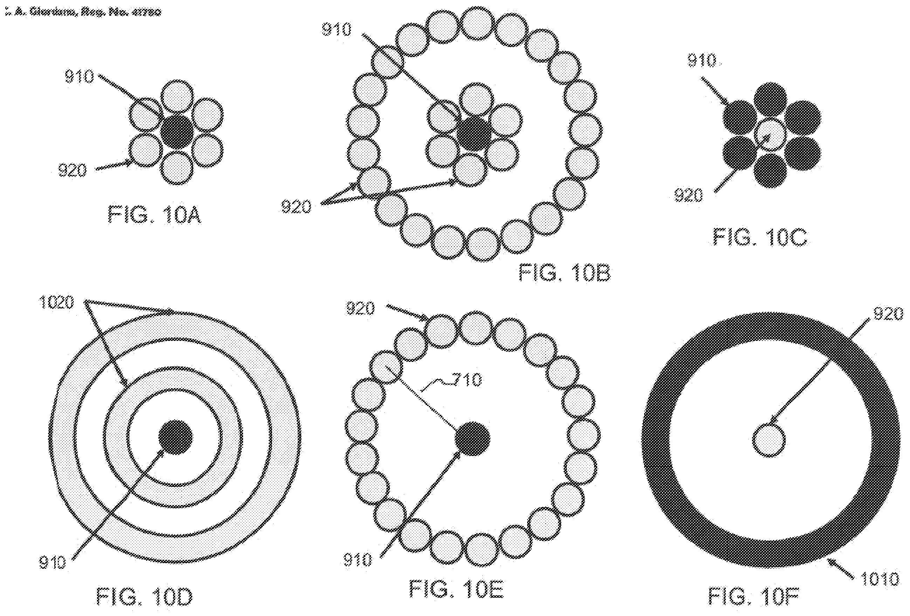

FIGs. 10A-10F illustrate exemplary embodiment of optical devcie 810, wherein optical fibers 910, 920 are arranged in a circular or annular configuration.

FIG. 10A illustrates an example of a center transmissive fiber 910 surrounded by a plurality of collection fibers 920.

FIG. 10B illustrates an example of a center transmissive fiber 910 surrounded by two rows of a plurality of collection fibers 920.

FIG. 10C illustrates an example of a plurality of transmissive fibers 910 centered around a center collection fiber 920.

FIG. 10D illustrates an example of a center based transmissive fiber 910 surrounded by a ring of optically clear material 1020 for collecting the Raman light 704.

FIG. 10E illustrates an example of a center based transmissive fiber 910 surrounded by a plurality of collection fibers 920.

FIG. 10F illustrates an example of a center-based collection fiber 920 surrounded by a optically clear material 1010.

In one embodiment, physical separation 710 of excitation wavelength 702 from collected wavelength 704 may be achieved through the use of a central illumination (excitation) region and an annular collection region. In another embodiment, physical separation 710 of excitation wavelength 702 from collected wavelength704 may be achieved through the use an annular illumination (excitation) region and a central collection region. In another embodiment, the collection wavelength region may be physically moved or masked from the excitation wavelength region to allow for variable distance between the excitation wavelength illumination area and the collection light wavelength area.

In another embodiment, the excitation wavelength region and the collection wavelength region may be oriented on opposite sides of the target object, 160, in a so-called transmission configuration.

In still another embodiment, the excitation wavelengths 702 may be directed toward target object 160 at an angle. Similarly, the collected wavelengths 704 may be collected at an angle with respect to the target object 160.

Although exemplary embodiments of a dual wavelength co-aligned/reflective Raman probe, with external lasers (FIG. 1A), a dual wavelength co-aligned/reflective n Raman probe, with internal lasers (FIG. 1B) ,a dual wavelength co-aligned/transmissive Raman probe with external lasers (FIG. 1C) and a dual wavelength spatially-oriented/ reflection Raman probe with external lasers (FIG. 1D) are discussed, it would be understood that, within the scope of the appended claims, the method of selection of excitation wavelength presented, herein, is applicable to other types of dual wavelength Raman probes (e.g., spatiallyoriented/reflection Raman probe with external lasers or internal lasers).

In addition, it would be known by those skilled in the art that the combining of the excitation wavelengths discussed may be performed by any of a known number of known wavelength combining methods (e.g., wavelength beam combining with dichroic mirrors or geometric beam combining, see US 7,420,996 B2).

The excitation lasers 110, 120 disclosed, herein, may be operated simultaneously, concurrently or sequentially. Sequential operation eliminates spurious signals e.g., fluorescence, that may be generated when both laser sources were to be operated simultaneously. However, it would be understood that simultaneous or concurrent operation has been considered as well. Hence, when the operation of the sources is concurrent, the laser light of the two sources may be combined as in joining together to form a single light beam composed of two wavelengths. Whereas, when (e.g., wavelength beam, geometric beam combining (see US 7420,996 B2, for example).

In the case of where the operation of the sources is sequential, then the laser light of one source is considered "combined" with the non-presence of light from the second laser light source such that a single beam of a single wavelength is formed.

Exemplary Raman pump wavelengths currently in use are 532 nm, 638 nm, 785nm, 830 nm, and 1064 nm. As is known in the art, shorter wavelength pump wavelengths yield higher Raman scattered signals as the Raman intensity is proportional to $\lambda^{-4}$. However shorter pump wavelengths are more likely to give rise to fluorescence, which can overwhelm the Raman spectral features. The method of Raman concatenation offers the possibility of mitigating the negative impact of fluorescence with the shorter wavelength excitation source since fluorescence is wavelength dependent while the Raman signal is both proportional to the $\lambda^{-4}$ and shifts with respect to the excitation wavelength. This allows for the possibility of quantifying a Raman signal in the Stretch band when it is not possible to quantify a Raman signal in the fingerprint region when high levels of fluorescence are present. Finally, the specific wavelength of the short or long wavelength laser source can be selected to mitigate any fluorescence resonance effects.

Further, Stokes spectra are typically more intense than are anti-Stokes spectra. As is well known in the art, a Stokes shift of v (measured in wavenumbers, i.e., cm-1) will give rise to a Raman signal wavelength, $\lambda_s$, related to the probe wavelength, $\lambda_p$, by:

$$1/\lambda_s \;=\; 1/\lambda_p \;+\; v \qquad\qquad (1)$$

Generally, the "fingerprint" region of the spectrum includes wavenumbers less than about 2000 cm$^{-1}$ whereas the "stretch" region includes wavenumbers ranging from about 2000 cm$^{-1}$ to 4000 cm$^{-1}$.

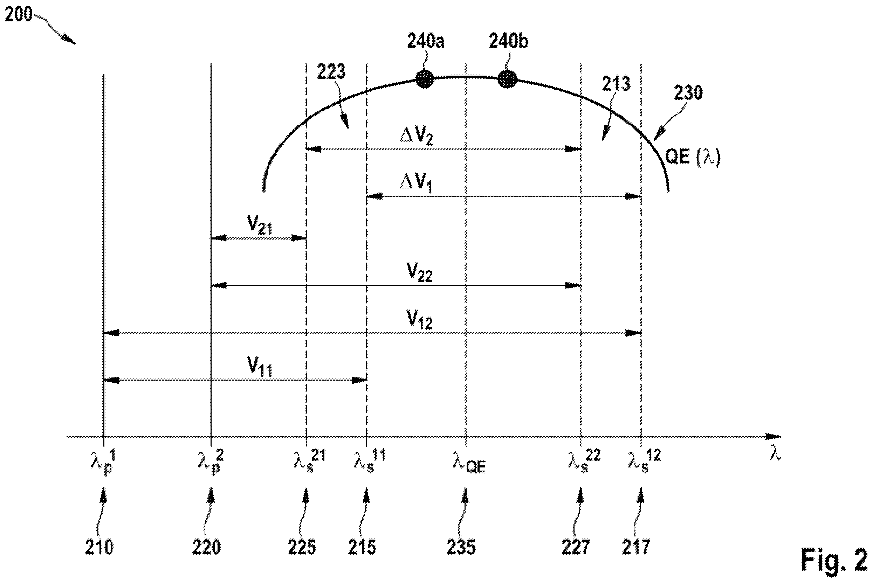

FIG. 2 illustrates an example of the determination of fingerprint and stretch regions of a spectrum that may be excited by two separate wavelengths such that the two resultant Stokes signal spectra can be detected using a single detector array in a compact spectrometer.

In accordance with the principles of the invention, the two probe wavelengths designated as $\lambda_p^1$ 210 and $\lambda_p^2$ 220 excite the stretch and fingerprint regions of the Raman spectrum, respectively. In this illustrated case, the second excitation wavelength $\lambda_p^1$ is of a shorter wavelength than the first excitation wavelength $\lambda_p^2$ 220.

Further illustrated is an exemplary wavelength range associated with a fingerprint region, $\Delta v_2$, 223 expressed in wavenumbers. The illustrated fingerprint region 213 is shown as extending from Raman signal wavelengths $\lambda_s^{21}$ 225 to $\lambda_s^{22}$ 227, which are associated with the first excitation wavelength $\lambda_p^2$ 220. Wavelengths $\lambda_s^{21}$ 225 and $\lambda_s^{22}$ 227 are determined from wavelength $\lambda_p^2$ 220 by shifted values $V_{21}$ and $V_{22}$, respectively, wherein shifted values $V_{21}$ and $V_{22}$ may be determined from equation 1, above.

In this illustrated example, Raman signal wavelength $\lambda_s^{21}$ 225 is conventionally shifted 1-2 nm (nanometers) from first excitation wavelength $\lambda_p^2$ 220 to avoid saturating the spectrometer with the backscattered pump light, while Raman signal wavelength $\lambda_s^{22}$ 227 is determined by calculating the wavelength associated with the fingerprint wavenumber range, $\Delta v_2$ 223:

$$1/\lambda_s^{22} = \; 1/\lambda_s^{21} \;+\; \Delta v_2. \qquad\qquad (2)$$

Further illustrated is a wavelength range associated with the Raman signal Stretch region, $\Delta v_1$, 213 expressed in wavenumbers. The illustrated Stretch region is shown as extending from Raman signal wavelengths $\lambda_s^{11}$ 215 and $\lambda s^{12}$ 217, which are associated with the second excitation wavelength $\lambda_p^1$ 210. Wavelengths $\lambda_s^{11}$ 215 and $\lambda s^{12}$ 217 are determined from wavelength from $\lambda_p^1$ 210 by shifted values $V_{11}$ and $V_{12}$, respectively, wherein values $V_{11}$ and $V_{12}$ may be determined from equation 1, above.

Accordingly, Raman signal wavelength $\lambda_s^{11}$ 215 is selected to essentially coincide with $\lambda_s^{21}$ 225 so as to enable the detector element of a spectrometer to be utilized for both pump lasers, while Raman signal wavelength $\lambda s^{12}$ 217 is determined by calculating the wavelength associated with the Stretch wavenumber range, $\Delta v_1$ 213, wherein the difference between $\lambda_s^{11}$ and $\lambda_s^{12}$ define the Stretch region.

$$1/\lambda_s^{12} = \; 1/\lambda_s^{11} \;+\; \Delta v_1. \qquad\qquad (3)$$

Further shown is an exemplary quantum efficiency curve, QE($\lambda$) 230, of the spectrometer to be used for the collection and analysis of the Raman signals generated by the first and second excitation wavelengths.

Accordingly, with a proper selection of the second excitation wavelength $\lambda_p^1$ 210 and the first excitation wavelength $\lambda_p^2$ 220 the generated Raman signals within both the stretch region and the fingerprint region may be captured by the detector element of a single spectrometer.

For the purposes of describing the subject matter regarded as the invention to those skilled in the art, the fingerprint region wavenumber range and Stretch region wavenumber range are approximately equal, i.e., $\Delta v_1 \approx \Delta v_2$, resulting in $\lambda_s^{11} \approx \lambda_s^{21}$ and $\lambda_s^{21}$ $\lambda_s^{22}$.

Furthermore, while second excitation wavelength $\lambda_p^1$ 210 and first excitation wavelength $\lambda_p^2$ 220 may be selected to provide for the capture of both the fingerprint and Stretch region using a same detector array, the selection of wavelengths $\lambda_p^1$ 210 and $\lambda_p^2$ 220 in accordance with the principles of the invention provides for the enhancement of the analytical performance of the spectrometer.

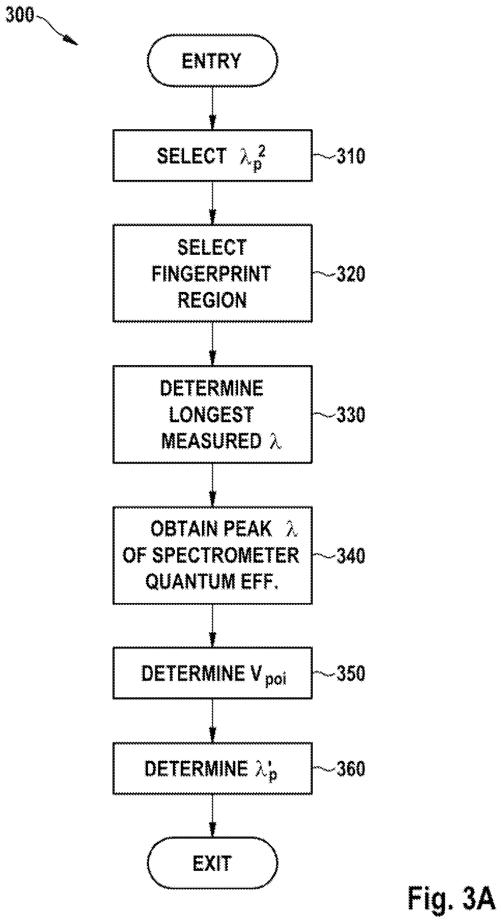

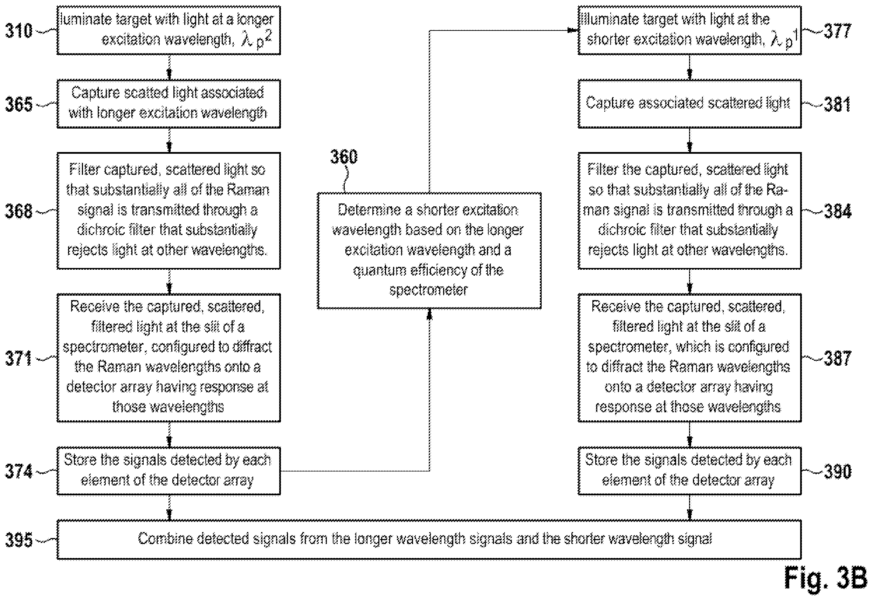

FIG. 3 illustrates a flowchart 300 of an exemplary process for determining the wavelengths of a dual-wavelength Raman probe in accordance with the principles of the invention.

In accordance with the principles of the invention, at step 310, a first excitation wavelength (i.e., $\lambda_p^2$) is selected. The first excitation wavelength is associated with the fingerprint region of the Raman signals reflected or scattered by the target object when illuminated by the first excitation wavelength.

The first excitation wavelength, $\lambda_p^2$, is selected to be as short as possible to mitigate fluorescence of the Raman spectra generated by the inelastic scattering of the first excitation wavelength by the target object. Thus, first excitation

wavelength, $\lambda_p{}^2$, is determined based on the Raman target sample 160 under investigation and its particular fluorescence characteristics when illuminated by the excitation wavelength.

For example, it would be known in the art that a first excitation wavelength, $\lambda_p{}^2$, for target classes of materials such as heavy petroleum (oil), biological materials, pharmaceutical materials and clear liquids may be selected as 1064 nm, 830 nm, 785 nm, and 532 nm, respectively.

For purpose of teaching the invention claimed, a wavelength such as 785 nm (nanometers) may be selected as the first excitation wavelength, wherein 785 nm is selected to minimize the fluorescence generated by the target object when illuminated by the first excitation wavelength.

The desired range of the fingerprint region wavenumbers ($\Delta v_2$) is selected based on a desired spectral range and resolution of the spectrometer (e.g. 2000 cm$^{-1}$) at step 320.

The selection of the first excitation wavelength, $\lambda_p{}^2$ and $\Delta v_2$ defines the longest measured wavelength of the spectrometer ($\lambda_s{}^{22}$) (step 330) as

$$\lambda_s{}^{22} \; = \; 1 \; / \; [\Delta v_2 \; + \; 1/\lambda_p{}^2] \qquad (4)$$

In this exemplary example with the use of a first excitation wavelength, $\lambda_p{}^2$, of 785 nm, the longest measured wavelength $\lambda_s{}^{22}$ may be determined from equation 4 above, as 931 nm.

Inspection of the quantum efficiency spectrum associated with the spectrometer to be used in the collection and analysis of the Raman signals may then be performed to determine a peak wavelength of the spectrometer quantum efficiency response, QE($\lambda$), in the determined fingerprint region (i.e., between wavelength $\lambda_p{}^2$ ( which is approximately equal to $\lambda_s{}^{21}$ ) and $\lambda_s{}^{22}$ ( step 340).

The quantum efficiency curve, QE($\lambda$), provides a measure of the efficiency of the spectrometer to collect the Raman signals over a known wavelength band. For example, and for purposes of describing the invention claimed, the quantum efficiency response curve ( $\lambda_{QE}$) within the range of the determined fingerprint region may be determined from current measurements or previous measurements of the response characteristics of the spectrometer.

For example, and for the purpose of describing the invention claimed to those skilled in the art, and with reference to FIG. 2, a peak (maximum) quantum efficiency ($\lambda_{QE}$) 235 of the quantum efficiency response curve 230 within the determined fingerprint region 223 may be determined. For the purpose of teaching the invention claimed, the peak quantum efficiency in this illustrated example may be determined to be 800 nm.

The Raman shifted peak of interest ($v_{poi}$) may then be determined for the specific chemical compound under investigation (i.e., target object) at step 350. For example, and for the purposes of describing the invention claimed to those skilled in the art, a Raman shifted peak of interest for a specific target object may be determined to be associated with a wavenumber of 3000 cm$^{-1}$.

The second excitation wavelength ($\lambda_p{}^1$) for quantitative analysis in the Stretch region may then be determined at step 360 as:

$$\lambda_p{}^1 \; = \; 1 \; / \; [v_{poi} \; + \; 1/\lambda_{QE}] \qquad (5)$$

Accordingly, the second excitation wavelength, ($\lambda_p{}^1$) may be determined based on the Raman shift peak of interest, which is associated with the specific target object, and the peak quantum efficiency of the spectrometer within the fingerprint region, which is defined by the selection of the first excitation wavelength.

From the exemplary wavelength selected as the first excitation wavelength ($\lambda_p{}^2$) 220, for the exemplary Raman shifted peak of interest ($v_{poi}$) of 3000 cm$^{-1}$ and the peak quantum efficiency ( $\lambda_{QE}$) 235, a second excitation wavelength ($\lambda_p{}^1$) 210 may be determined as 645 nm.

As would be appreciated, the selection of the second excitation wavelength in the manner disclosed in equation 5 provides for a coincidence of the Raman peak of interest wavelengths with the peak wavelength ($\lambda_{QE}$) of the spectrometer quantum efficiency within the fingerprint region.

Hence, the analysis of the Raman signals associated with the second excitation wavelengths is performed at, or substantially close to, the peak quantum efficiency of the spectrometer which results in better analytical performance of the target object.

Although the selection of the second excitation wavelength is determined based of the peak quantum efficiency, as expressed in equation 5, and the most significant spectra performance may be achieved when the determined second excitation wavelength is coincident with the peak quantum efficiency, it would be recognized that a non-peak quantum efficiency value may similarly be utilized to determine the second excitation wavelength. It is, however, preferred that a wavelength $\lambda_{QE}$ is determined at which the quantum efficiency within the range of a quantum efficiency curve QE($\lambda$) assumes a peak value, associated with said spectrometer. That is, in accordance with the principles of the invention, the term "peak" as used with regard to the term "peak quantum efficiency" need not be the "peak" or maximum value as used in the ordinary and customary sense. Rather the term "peak" as used herein is considered to be a range about the maximum (or peak) value of spectra quantum efficiency. For example, the range may be defined by a range of +/- 10 percent of the wavelength number of the maximum value of the spectra quantum efficiency. Similarly, the range may be defined as +/- 15 percent of the wavelength number of the maximum value of the spectra quantum efficiency. In another example, the range may be defined as the wavelength numbers within 3dB of the maximum value of the spectra quantum efficiency. See for example, FIG. 2, wherein points 240a, 240b represent the 3db (or half-power) points with respect to the peak quantum efficiency 235. In accordance with another aspect of the invention, the specific range may be determined by a desired increase in the signal-to-noise ratio of the received Raman spectra.

Accordingly, the determination of a second excitation wavelength base equation 5 may be more generally expressed as:

$$\lambda_p^1 \ = \ 1 \ / \ [\text{v}_{poi} \ + \ 1/(\lambda_{QE} \ + \ (+/-\delta))] \qquad (6)$$

where $\delta$ represents a range about the maximum (peak) quantum efficiency value.

Thus, in accordance with the principles of the invention, the term "peak" is considered to be one of: the maximum value of the response spectra of the spectrometer and a range about the maximum value of the response spectra of the spectrometer.

FIG. 3B illustrates an exemplary process for operating a dual-wavelength Raman probe in accordance with the principles of the invention.

In accordance with the principles of the invention, a first spectral Raman component generated by the excitation of the target object by a first excitation wavelength, is captured, filtered, received, processed and stored as shown in steps 310, 365, 368, 371, 374, respectively. More specifically, a target object is illuminated by a first excitation wavelength (i.e., $\lambda_p^2$), which has been selected to minimize the fluorescence generated by the target object when illuminated by the first excitation wavelength. The Raman scattered light reflected or scattered by the target object is captured at step 365. The Raman scattered light is then filtered at step 368 and provided to the spectrometer at step 371. At step 374, a spectral analysis performed on the reflected or scattered signals provided to the spectrometer are then stored at step 374.

At step 360, a second excitation wavelength (i.e., $\lambda p^1$) is determined based on the first excitation wavelength and the quantum efficiency of the spectrometer within the fingerprint region determined based on the first excitation wavelength, as discussed above.

In accordance with the principles of the invention, after a determination of the second excitation wavelength based on equation 5 above, is made, an evaluation of the determined second excitation wavelength may be made with regard to wavelength performance of conventional laser devices in order to determine a suitability of using conventional lasers having known wavelength output.

That is, the wavelengths of one or more selected conventional lasers may be evaluated with regard to equation 6 to determine which of the more or more selected conventional lasers may be used in place of specially designed lasers that output a wavelength based on equation 5.

A second Raman component generated by the excitation of the target object 160 by the determined second excitation wavelength, is captured, filtered, received, processed, and stored as shown in steps 377, 381, 384, 387, 390, respectively. Specifically, the target object 160 is illuminated by the second excitation wavelength at step 377. The scattered or reflected Raman wavelengths associated with the second excitation wavelength are captured (step 381) and filtered at step 384. At step 387, the Raman wavelengths are provided to the spectrometer and at step 390, the results of a spectral analysis performed by the spectrometer are stored.

At step 395, the first and second Raman spectral component data are concatenated, or combined together, wherein the first Raman spectral component may be used to determine an identification of a compound of the target object 160, while the second Raman spectral component may be used to determine a concentration of the compound of the target object. Alternatively, the first and second Raman spectral may be processed independently to provide a more detailed analysis of the target object. The selection of the first and second excitation wavelengths in accordance with the principles of the invention provides for enhanced quantitative analysis as the Raman spectrum coincides (or substantially coincides) with a peak of the quantum efficiency of the spectrometer within the fingerprint region. The increased signal-to-noise ratio of the received Raman signals caused by the coincidence of the Raman signal with the peak of quantum efficiency of the spectrometer provides for an increase in the distinguishing features of the target object (or the component under analysis within the target object).

Accordingly, the dual laser Raman probe described herein provides opportunities to monitor, for example, a pharmaceutical bioreactor (i.e., a sealed vessel in which bacteria are grown in an aqueous liquid). An H Stretch band may be used as a calibration standard against which CH and NH Stretch bands and be monitored. For example, the CH and NH Stretch bands may be used to determine changes in proteins within a pharmaceutical bioreactor as proteins are generated by a bacteria and food (carbohydrates) are consumed. In accordance with another application of the dual laser Raman probe disclosed herein, a concentration of an additive may be determined by calibration using the Raman signal of pure water.

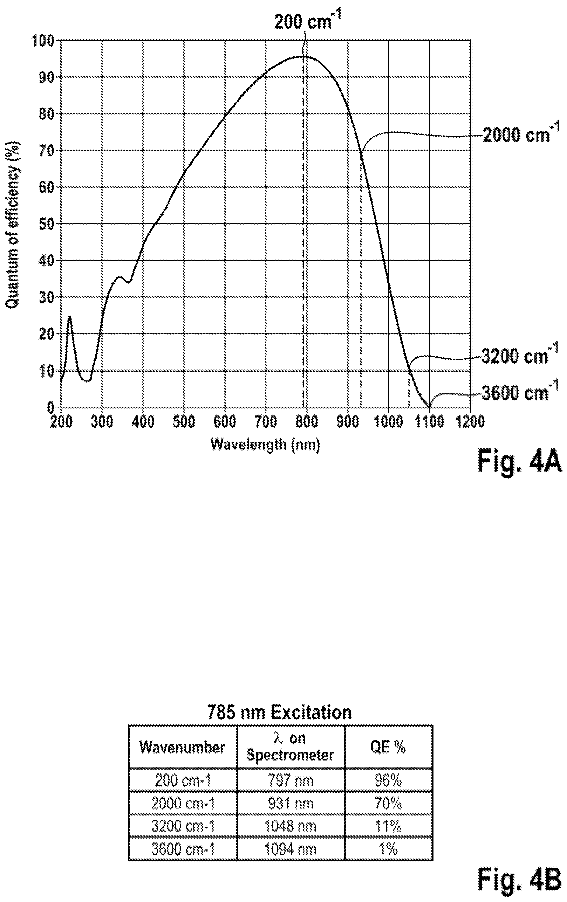

FIGs. 4A and 4B illustrate a typical silicon detector quantum efficiency curve (FIG. 4A) and a corresponding table (FIG. 4B) illustrating the expected quantum efficiency vs. wavenumber for a first Raman pump laser source for a 300 nm wavelength dispersion range.

Referring to FIG. 4A, which illustrates an exemplary quantum efficiency vs. wavenumber, and the efficiency associated with the wavelength shift associated with a 785 nm pump laser source, a wavelength shift of the 785 nm excitation wavelength associated with a 200 cm$^{-1}$ wavenumber provides for a quantum efficiency of 96 % , whereas a wavelength shift associated with a 3600 cm$^1$ wavenumber provides for an efficiency of 1%. Hence, an analysis of the Raman shifted wavelength associated with a 785 nm excitation wavelength at a 200 cm$^{-1}$ is significantly better than an analysis of a Raman shifted wavelength, associated with a 785 nm excitation wavelength, at a 3600 cm$^{-1}$, as the performance of the spectrometer is significantly greater for the Raman shifted wavelength at 200 cm$^{-1}$.

FIG. 4B tabulates the quantum efficiency for spectrometer efficiency associated with a 785 nm excitation wavelength for different wavelength shifts.

FIGs. 5A and 5B illustrate the efficiency improvement and a corresponding table obtained for the selection of excitation wavelengths, in accordance with the principles of the invention.

In accordance with the principles of the invention, selection of the second excitation wavelength (e.g., 680 nm), based on the first wavelength and the spectral efficiency of the spectrometer, provides for a quantum efficiency of 90 percent at 200cm$^{-1}$ whereas a wavelength shift associated with a 3600 cm$^{-1}$ wavenumber provides a quantum efficiency of 82%. Hence, the selection of the second excitation wavelength in accordance with the principles of the invention provides significant improvement of the analysis of the Raman signals.

Hence, selection of the dual excitation wavelengths through the matching of the peak of the quantum efficiency curve to a particular wavenumber band of interest, in accordance with the principles of the invention, provides for an enhancement in the signal processing capability of the spectrometer.

An example, of the selection of the first and second excitation wavelengths may be determined as follows:

| $\lambda_p{}^2$ - Fingerprint Laser Wavelength (nm) which is approximately $\lambda_s{}^{21}$ (nm) | Wavenumber (cm$^{-1}$) |
|---|---|
| 1064 | 9398.496241 |
| | |
| $\Delta v2$ - Delta Wavelength Target (CM-1) | |
| 2000 | |
| | |
| $\lambda_s{}^{22}$ = QE Range Limit (nm) | |
| 1351.626016 | 7398.496241 |
| | |
| QE Peak Wavelength (nm) | (cm-1) |
| 1100 | 9090.909091 |
| | |
| Raman Peak of Interest (cm-1) | |
| 3000 | |
| | |
| $\lambda p^1$ - Concatenation Excitation Wavelength (nm) | |
| 827.0676692 | 12090.90909 |
| | |

Accordingly, a selection of a second excitation wavelength of 827.0676692 nm in accordance with the principles of the invention provides an improved, enhanced, signal-to-noise ratio in the Raman signal analyzed.

Furthermore, with the enhanced Stretch band signal, the entire enhanced Stretch band may be used for additional data as input for chemometrics algorithms or as orthogonal data to validate of data from the fingerprint region.

For example, the Raman probe excitation wavelength selection method described, herein, may have use in medical diagnostics as fats and proteins may be monitored using the CH and NH bands and water using the OH band water.

Analysis of the CH and NH bands, with the improved or enhanced signal analytical performance described, herein, may help diagnose inflammation or other pathological conditions.

The Raman probe excitation wavelength selection method described, herein, may have use in pharmaceutical process analytics for compound grown in water ($H_2O$) as analysis of such compounds using near-infrared (NIR) spectroscopy is not effective.

The Raman probe excitation wavelength selection method described, herein, may have use to analyze petrochemicals as CH bands are important and where water is generally a contaminant.

Generally speaking, this disclosure encompasses the use of a device as described herein in medical diagnostics and in analyses associated with petrochemical processing or bioreactors.

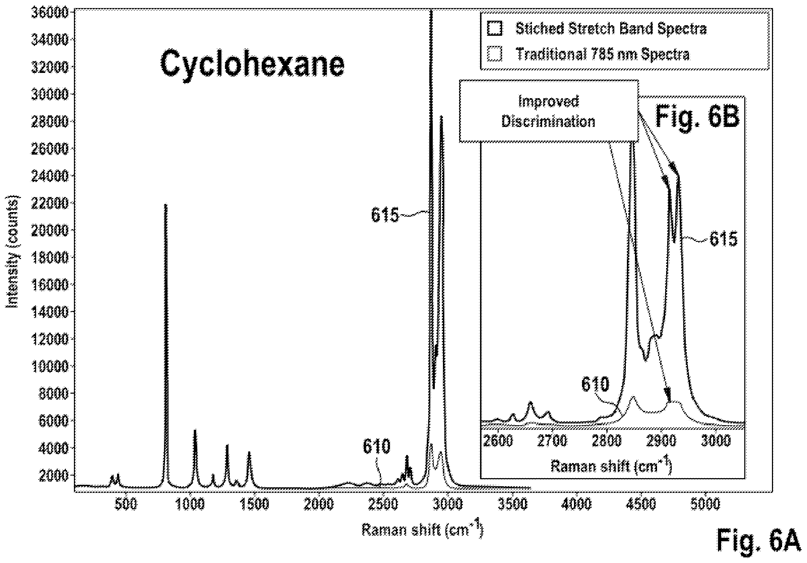

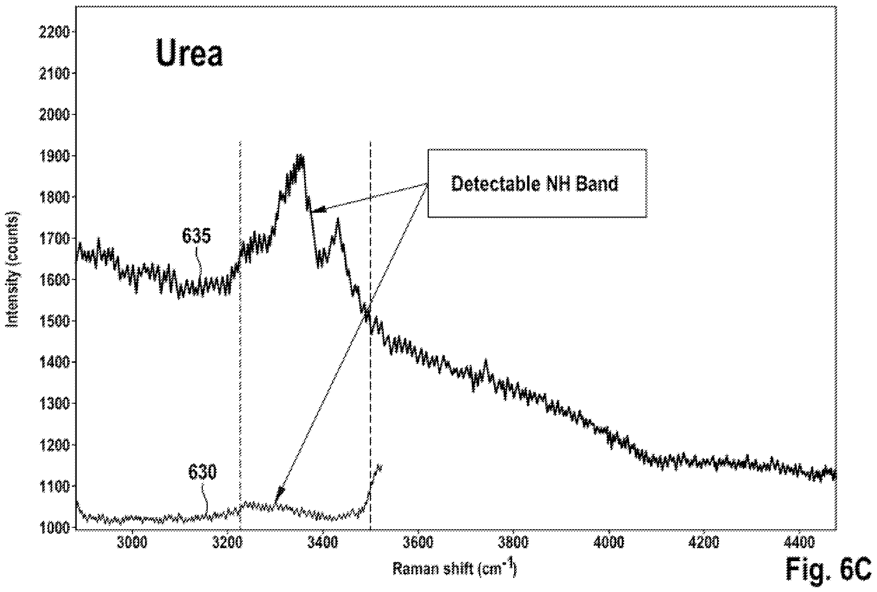

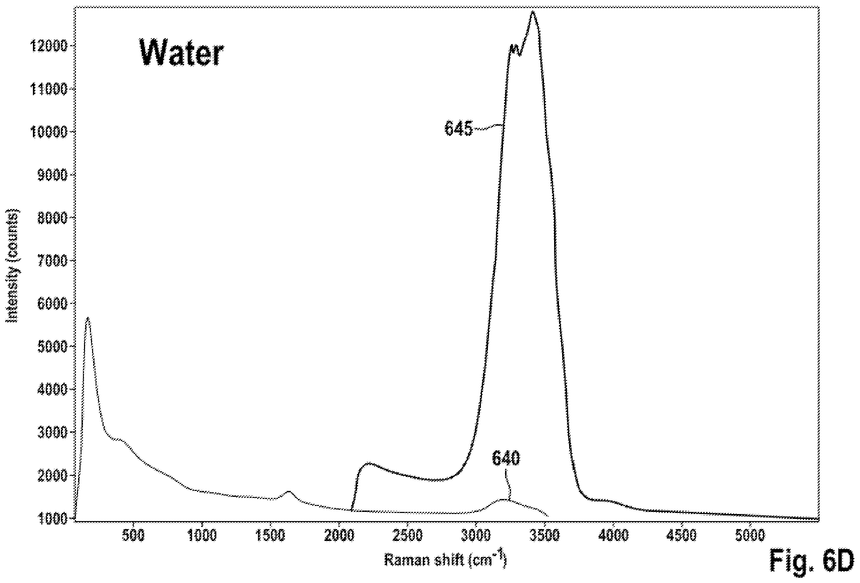

Figures 6A and 6B illustrate examples of the enhancement of Raman signal processing using a wavelength laser pump source in the Stretch band region selected in accordance with the principles of the invention for cyclohexane.

Specifically, FIG. 6A illustrates the spectral analysis associated with the fingerprint region and the Stretch region associated with a target object including cyclohexane. FIG. 6B illustrates an expanded version of the Stretch region shown in FIG. 6A.

FIG. 6A illustrates two Raman spectra 610 and 615, wherein spectra 610 is obtained using a 785 nm wavelength laser excitation signal and spectra 615 is obtained using a 785 first excitation wavelength of 785 nm and a second excitation wavelength of 680 nm, wherein the 680 nm wavelength is selected in accordance with the principles of the invention disclosed herein.

Dual-wavelength Raman probe technology disclosed, herein, enables new applications in the process automation market. For example, the use of -H Stretch region vs. fingerprint region may provide for improved quantitative measurement of changes in concentration or predictive quantitation of concentration. For example, the dual-wavelength Raman probe with the wavelength selection as presented, herein, may be directly applicable to enhance the analysis of:

- % petroleum products in water
- % contaminants in water
- % sugar in water
- % protein in water
- % sugar/protein vs. time in a biopharma process reaction
- Identification of bacteria byproduct (e.g. are you producing what you want?)
- Ratio intensity of one set of peaks vs another (e.g. reduces complexity of system calibration)
- Monitoring the Intensity of one or multiple peaks over time.
- Higher sensitivity due to reduction in noise floor (increased S/N)
- Optimizing the Raman band of interest and the quantum efficiency of the detector (e.g. amplifying of the signal of Alkyne bands)
- Pass / fail analysis (e.g. Identifying the presence or lack thereof of specific bands).

In summation, a dual-wavelength Raman probe system comprising first and second excitation wavelengths impinge upon a target object and the reflected or scatted wavelength by the target object are collected and analyzed by a spectrometer. In accordance with the principles of the invention, the excitation wavelengths are selected based on the target object and the quantum efficiency (or within a known range) of the spectrometer in order to improve the signal to noise ratio of the Raman signals by having the Raman signals substantially coincide with the peak quantum efficiency of the spectrometer. Collection of the Raman signals substantially coincident with the peak quantum efficiency of the spectrometer provides for an improved signal to noise ratio of the Raman signal.

Although the invention has been described with regard to "a wavelength" emitted by the laser source or operated on by the Raman and Rayleigh scattering it would be recognized that the term "a wavelength" is a term of art and refers to a wavelength or a band of wavelengths around a nominal desired wavelength. The invention has been described with reference to specific embodiments. One of ordinary skill in the art however appreciates that various modifications and changes can be made without departing from the scope of the invention as set forth in the claims. Accordingly, the specification is to be regarded in an illustrative manner, rather than with a restrictive view.

For the purposes of this invention, the term "wavelength" is sometimes used as an abbreviation for the expression "light of a (certain) wavelength". The skilled person will be aware, that in these cases, the expressions are interchangeable.

The skilled person will understand that for the purposes of this invention, wavenumbers (v, usually given in $cm^{-1}$) and wavelengths ($\lambda$, usually given in nm) must be converted into the same dimensions for the purpose of calculations.

As used herein, the terms "comprises", "comprising", "includes", "including", "has", "having", or any other variation thereof, are intended to cover non-exclusive inclusions. For example, a process, method, article or apparatus that comprises a list of elements is not necessarily limited to only those elements but may include other elements not expressly listed or inherent to such process, method, article, or apparatus. In addition, unless expressly stated to the contrary, the term "or' refers to an inclusive "or" and not to an exclusive "or". For example, a condition A or B is satisfied by any one of the following: A is true (or present) and B is false (or not present); A is false (or not present) and B is true (or present); and both A and B are true (or present).

The terms "a" or "an" as used herein are to describe elements and components of the invention. This is done for convenience to the reader and to provide a general sense of the invention. The use of these terms in the description herein should be read and understood to include one or at least one. In addition, the singular also includes the plural unless indicated to the contrary. For example, reference to a composition containing "a compound" includes one or more compounds. As used in this specification and the appended claims, the term "or" is generally employed in its sense including "and/or" unless the content clearly dictates otherwise.

All numeric values are herein assumed to be modified by the term "about," whether or not explicitly indicated. The term "about" generally refers to a range of numbers that one of skill in the art would consider equivalent to the recited value (i.e., having the same function or result). In any instances, the terms "about" may include numbers that are rounded (or lowered) to the nearest significant figure.

**Claims**

1. A method for determining a first excitation wavelength $\lambda_p^2$ and a second excitation wavelength $\lambda_p^1$ for use in a dual laser spectrometer system comprising:

    - a first laser source (110) configured to emit a first excitation wavelength (220) and a second laser source (120) configured to emit a second excitation wavelength (210); and
    - a spectrometer (190) configured to receive a first Raman signal and a second Raman signal, wherein said first Raman signal is associated with said first excitation wavelength (220) and said second Raman signal is associated with said second excitation wavelength (210),
    said method comprising:

        - selecting said first excitation wavelength based on at least one characteristic of a target object (160), wherein said at least one characteristic is associated with a fluorescence generated by an interaction of the first excitation wavelength (220) with said target object (160);
        - determining a fingerprint region of the first Raman signal associated with said first excitation wavelength (220);

    the method being **characterized by** further comprising:

        - determining a wavelength $\lambda_{QE}$ at which a quantum efficiency of the spectrometer within the fingerprint region assumes a peak value;
        - determining a Raman shifted peak of interest $v_{poi}$ for the target object; and
        - determining said second excitation wavelength $\lambda_p^1$ based on the peak quantum efficiency value wavelength $\lambda_{QE}$ and the Raman shifted peak of interest $v_{poi}$, wherein said second excitation wavelength $\lambda p^1$ is determined as:

$$\lambda_p^1 \;=\; 1 \;/\; [v_{poi} \;+\; 1/\lambda_{QE}]$$

2. Method according to claim 1, wherein the Raman shifted peak of interest $v_{poi}$ is a stretch peak emitted by the target object upon irradiation with the second laser light at the second excitation wavelength.

3. A diagnostic system comprising

    - a spectrometer (190), said spectrometer having a known quantum efficiency;
    - a Raman probe device (100) configured to provide Raman light wavelengths to the spectrometer (190), said Raman light wavelengths being generated in response to an excitation light illuminating a target object (160),

    wherein said excitation light comprises a first light comprising a first excitation wavelength, $\lambda_p^2$ (220), and a second light comprising a second excitation wavelength, $\lambda_p^1$(210), said first excitation wavelength (220) is based on a fluorescence generated by an interaction of the first excitation wavelength (220) with said target object (160), and said second excitation wavelength (210) is based on a wavelength $\lambda_{QE}$ at which a quantum efficiency of said spectrometer within the fingerprint region (223) defined by the first excitation wavelength (220) assumes a peak value and a Raman shifted peak of interest $v_{poi}$ for the target object (160), and

- a control unit adapted to determine the second excitation wavelength (210) by executing the method according to any of claims 1 to 2.

4. Diagnostic system according to claim 3, wherein the Raman shifted peak of interest $v_{poi}$ is a stretch peak emitted by the target object (160) upon irradiation with the excitation light comprising the second excitation wavelength (210).

5. Diagnostic system according to any one of claims 3 to 4, wherein said Raman probe device (100) comprises:

a first lens (150) configured to:
focus said first light and said second light onto said target object (160); and
a filter (170) configured to:

pass said Raman light wavelengths; and
block said first excitation wavelength and said second excitation wavelength from passing to said spectrometer (190).

6. Diagnostic system according to claim 5, wherein said first lens (150) is configured to:

collect said Raman light wavelengths and
provide said collected Raman light wavelengths to said filter (170).

7. Diagnostic system according to claim 5, comprising:
a second lens (151), said second lens configured to:

collect said Raman light wavelengths, and
provide said Raman light wavelengths to said filter (170).

8. Diagnostic system according to claim 7, comprising:
an optical device (810) comprising:

at least one optical fiber (910) configured to:

receive said excitation light; and
transmit said received excitation light to said target object; and

at least one optical fiber (920) configured to:

receive said Raman light wavelengths; and
direct said received Raman light wavelengths to said second lens (151).

9. Diagnostic system of claim 8, comprising:
a mask, wherein said mask prevents selected ones of said plurality of optical fibers receiving said Raman light wavelengths from receiving said Raman light wavelengths.

10. Diagnostic system according to one of claims 8 or 9, wherein said optical device (810) comprises:
a plurality of optical fibers (910, 920) arranged in one of: a 1-dimensional array of optical fibers and a 2-dimensional array of optical fibers.

11. Diagnostic system according to claim 8, wherein said optical device (810) comprises:
a plurality of optical fibers (910, 920) arranged annularly about a center optical fiber, wherein said center optical fiber is one of: said transmissive optical fiber and said receptive optical fiber.

12. Diagnostic system according to any one of claims 3 to 4, comprising:

a first laser (110) configured to:

generate said first light, wherein said first laser is one of: internal to said Raman probe device (100) and external to said Raman probe device (100);

a second laser (120) configured to:

generate said second light, wherein said second laser is one of: internal to said Raman probe device (100) and external to said Raman probe device (100).

13. A computer program comprising instructions to cause the system of any one of claims 3 to 4 to determine the second excitation wavelength (210) by performing the method according to any one of claims 1 to 2.

**Patentansprüche**

1. Verfahren zur Bestimmung einer ersten Anregungswellenlänge $\lambda_p^2$ und einer zweiten Anregungswellenlänge $\lambda_p^1$ zur Verwendung in einem dualen Laserspektrometersystem, umfassend:

- eine erste Laserquelle (110), die so ausgelegt ist, dass sie eine erste Anregungswellenlänge (220) emittiert, und eine zweite Laserquelle (120), die so ausgelegt ist, dass sie eine zweite Anregungswellenlänge (210) emittiert; und

- ein Spektrometer (190), das so konfiguriert ist, dass es ein erstes Raman-Signal und ein zweites Raman-Signal empfängt, wobei das erste Raman-Signal mit der ersten Anregungswellenlänge (220) verbunden ist und das zweite Raman-Signal mit der zweiten Anregungswellenlänge (210) verbunden ist,

Dieses Verfahren umfasst:

- Auswählen der ersten Anregungswellenlänge auf der Grundlage von mindestens einem Merkmal eines Zielobjekts (160), wobei das mindestens eine Merkmal mit einer Fluoreszenz verbunden ist, die durch eine Wechselwirkung der ersten Anregungswellenlänge (220) mit dem Zielobjekt (160) erzeugt wird;

- Bestimmung eines Fingerabdruckbereichs des ersten Raman-Signals, der mit der ersten Anregungswellenlänge (220) verbunden ist;

wobei das Verfahren **dadurch gekennzeichnet ist, dass** es ferner Folgendes umfasst:

- Bestimmung einer Wellenlänge $\lambda_{QE}$ , bei der die Quanteneffizienz des Spektrometers innerhalb des Fingerabdruckbereichs einen Spitzenwert annimmt;

- Bestimmung eines Raman-verschobenen Peaks von Interesse $v_{poi}$ für das Zielobjekt; und

- Bestimmen der zweiten Anregungswellenlänge $\lambda_p^1$ auf der Grundlage der Spitzenquanteneffizienzwert-Wellenlänge $\lambda_{QE}$ und des interessierenden Raman-verschobenen Peaks $v_{poi}$ , wobei die zweite Anregungs-wellenlänge $\lambda_p^1$ wie folgt bestimmt wird:

$$\lambda_p^1 = 1 \ / \ [v_{poi} + 1/ \ ] \ \lambda_{QE}$$

2. Verfahren nach Anspruch 1, wobei der Raman-verschobene Peak von Interesse $v_{poi}$ ein Streckungspeak ist, der von dem Zielobjekt bei Bestrahlung mit dem zweiten Laserlicht bei der zweiten Anregungswellenlänge emittiert wird.

3. Ein Diagnosesystem mit

- ein Spektrometer (190), wobei das Spektrometer eine bekannte Quanteneffizienz aufweist;

- eine Raman-Sondenvorrichtung (100), die so konfiguriert ist, dass sie dem Spektrometer (190) Raman-Lichtwellenlängen zuführt, wobei die Raman-Lichtwellenlängen als Reaktion auf ein Anregungslicht erzeugt werden, das ein Zielobjekt (160) beleuchtet,

wobei das Anregungslicht ein erstes Licht mit einer ersten Anregungswellenlänge, $\lambda_p^2$ (220), und ein zweites Licht mit einer zweiten Anregungswellenlänge, $\lambda_p^1$ (210), umfasst, wobei die erste Anregungswellenlänge (220) auf einer Fluoreszenz basiert, die durch eine Wechselwirkung der ersten Anregungswellenlänge (220) mit dem Zielobjekt (160) erzeugt wird und die zweite Anregungswellenlänge (210) auf einer Wellenlänge $\lambda_{QE}$ basiert, bei der eine Quanteneffizienz des Spektrometers innerhalb des durch die erste Anregungswellenlänge (220) definierten Fingerabdruckbereichs (223) einen Spitzenwert und einen Raman-verschobenen Peak von Interesse $v_{poi}$ für das Zielobjekt

(160) annimmt, und

- eine Steuereinheit zur Bestimmung der zweiten Anregungswellenlänge (210) durch Ausführen des Verfahrens nach einem der Ansprüche 1 bis 2.

4. Diagnosesystem nach Anspruch 3, wobei der interessierende Raman-verschobene Peak $v_{poi}$ ein Streckungspeak ist, der von dem Zielobjekt (160) bei Bestrahlung mit dem Anregungslicht mit der zweiten Anregungswellenlänge (210) emittiert wird.

5. Diagnosesystem nach einem der Ansprüche 3 bis 4, wobei die Raman-Sondenvorrichtung (100) umfasst:

eine erste Linse (150), die so konfiguriert ist, dass sie:

- Fokussieren des ersten Lichts und des zweiten Lichts auf das Zielobjekt (160); und

einen Filter (170), der so konfiguriert ist, dass er:

- die Wellenlängen des Raman-Lichts durchlassen; und
- die erste Anregungswellenlänge und die zweite Anregungswellenlänge am Durchgang zum Spektrometer (190) zu hindern.

6. Diagnosesystem nach Anspruch 5, wobei die erste Linse (150) so konfiguriert ist, dass sie:

- die Wellenlängen des Raman-Lichts sammelt; und
- die gesammelten Raman-Lichtwellenlängen für den Filter bereitstellt (170).

7. Diagnosesystem nach Anspruch 5, umfassend:

- eine zweite Linse (151), wobei die zweite Linse so konfiguriert ist, dass sie:

- die Wellenlängen des Raman-Lichts sammelt; und
- die Wellenlängen des Raman-Lichts dem Filter (170) zuführt.

8. Diagnosesystem nach Anspruch 7, umfassend:

- eine optische Vorrichtung (810) mit:

- mindestens einer optische Faser (910), die so konfiguriert ist, dass sie:

- das Anregungslicht empfängt; und
- das empfangene Anregungslicht auf das Zielobjekt überträgt; und

- mindestens eine optische Faser (920), die so konfiguriert ist, dass sie:

- die Wellenlängen des Raman-Lichts empfängt; und
- die empfangenen Raman-Lichtwellenlängen auf die zweite Linse (151) richtet.

9. Diagnosesystem nach Anspruch 8, umfassend:

- eine Maske, wobei die Maske verhindert, dass ausgewählte Fasern aus der Vielzahl der optischen Fasern, die die Raman-Lichtwellenlängen empfangen, die Raman-Lichtwellenlängen empfangen.

10. Diagnosesystem nach einem der Ansprüche 8 oder 9, wobei die optische Vorrichtung (810) umfasst:

- eine Vielzahl von optischen Fasern (910, 920), die entweder in einer 1-dimensionalen Anordnung von optischen Fasern oder in einer 2-dimensionalen Anordnung von optischen Fasern angeordnet sind.

11. Diagnosesystem nach Anspruch 8, wobei die optische Vorrichtung (810) umfasst:

- eine Vielzahl von optischen Fasern (910, 920), die ringförmig um eine zentrale optische Faser angeordnet sind, wobei die zentrale optische Faser eine der folgenden ist: die transmissive optische Faser und die rezeptive optische Faser.

**12.** Diagnosesystem nach einem der Ansprüche 3 bis 4, umfassend:

- einen ersten Laser (110), der so konfiguriert ist, dass er:

    - das erste Licht erzeugt, wobei der erste Laser entweder innerhalb der Raman-Sondenvorrichtung (100) oder ausserhalb der Raman-Sondenvorrichtung (100) angeordnet ist;

- einen zweiten Laser (120), der so konfiguriert ist, dass er:

    - das zweite Licht erzeugt, wobei der zweite Laser entweder innerhalb der Raman-Sondenvorrichtung (100) oder ausserhalb der Raman-Sondenvorrichtung (100) angeordnet ist.

**13.** Computerprogramm mit Anweisungen, um das System nach einem der Ansprüche 3 bis 4 zu veranlassen, die zweite Anregungswellenlänge (210) durch Ausführen des Verfahrens nach einem der Ansprüche 1 bis 2 zu bestimmen.

**Revendications**

**1.** Méthode de détermination d'une première longueur d'onde d'excitation $\lambda_p^2$ et d'une seconde longueur d'onde d'excitation $\lambda_p^1$ pour utilisation dans un système de spectromètre à deux lasers :

   - une première source laser (110) configurée pour émettre une première longueur d'onde d'excitation (220) et une seconde source laser (120) configurée pour émettre une seconde longueur d'onde d'excitation (210) ; et
   - un spectromètre (190) configuré pour recevoir un premier signal Raman et un second signal Raman, ledit premier signal Raman étant associé à la première longueur d'onde d'excitation (220) et ledit second signal Raman étant associé à la seconde longueur d'onde d'excitation (210), la méthode consiste à
   - sélecter de la première longueur d'onde d'excitation sur la base d'au moins une caractéristique d'un objet cible (160), ladite caractéristique étant associée à une fluorescence générée par une interaction de la première longueur d'onde d'excitation (220) avec ledit objet cible (160) ;
   - déterminer une région d'empreinte du premier signal Raman associée à la première longueur d'onde d'excitation (220) ;
   la méthode est **caractérisée par le fait qu'**elle comprend en outre
   - déterminer une longueur d'onde $\lambda_{QE}$ à laquelle l'efficacité quantique du spectromètre dans la région de l'empreinte digitale atteint une valeur maximale ;
   - déterminer d'un pic d'intérêt décalé Raman $v_{poi}$ pour l'objet cible ; et
   - déterminer ladite deuxième longueur d'onde d'excitation $\lambda_p^1$ sur la base de la valeur d'efficacité quantique maximale longueur d'onde $\lambda_{QE}$ et du pic d'intérêt décalé Raman $v_{poi}$ , dans laquelle ladite deuxième longueur d'onde d'excitation $\lambda_p^1$ est déterminée comme suit :

$$\lambda_p^1 = 1 \ / \ [v_{poi} + 1/ \ ] \ \lambda_{QE}$$

**2.** Méthode selon la revendication 1, dans lequel le pic Raman décalé d'intérêt $v_{poi}$ est un pic d'étirement émis par l'objet cible lors de l'irradiation par la seconde lumière laser à la seconde longueur d'onde d'excitation.

**3.** Un système de diagnostic comprenant

   - un spectromètre (190), ledit spectromètre ayant une efficacité quantique connue ;
   - un dispositif de sonde Raman (100) configuré pour fournir des longueurs d'onde de lumière Raman au spectromètre (190), lesdites longueurs d'onde de lumière Raman étant générées en réponse à une lumière d'excitation illuminant un objet cible (160),
   dans lequel ladite lumière d'excitation comprend une première lumière comprenant une première longueur d'onde d'excitation, $\lambda_p^2$ (220), et une seconde lumière comprenant une seconde longueur d'onde d'excitation, $\lambda_p^1$ (210), ladite première longueur d'onde d'excitation (220) est basée sur une fluorescence générée par une interaction de la première longueur d'onde d'excitation (220) avec ledit objet cible (160), et ladite deuxième longueur d'onde d'excitation (210) est basée sur une longueur d'onde $\lambda_{QE}$ à laquelle une efficacité quantique dudit spectromètre dans la région d'empreinte digitale (223) définie par la première longueur d'onde d'excitation (220) atteint une valeur maximale et un pic d'intérêt décalé Raman $v_{poi}$ pour l'objet cible (160), et

- une unité de commande adaptée pour déterminer la deuxième longueur d'onde d'excitation (210) en exécutant le procédé selon l'une quelconque des revendications 1 à 2.

4. Système de diagnostic selon la revendication 3, dans lequel le pic d'intérêt décalé Raman $v_{poi}$ est un pic d'étirement émis par l'objet cible (160) lors de l'irradiation avec la lumière d'excitation comprenant la seconde longueur d'onde d'excitation (210).

5. Système de diagnostic selon l'une quelconque des revendications 3 à 4, dans lequel ledit dispositif de sonde Raman (100) comprend :

    - une première lentille (150) configurée pour :

        - focaliser ladite première lumière et ladite seconde lumière sur ledit objet cible (160) ; et

    - un filtre (170) configuré pour :

        - passer lesdites longueurs d'onde de la lumière Raman ; et
        - bloquer ladite première longueur d'onde d'excitation et ladite deuxième longueur d'onde d'excitation pour qu'elles ne passent pas dans ledit spectromètre (190).

6. Système de diagnostic selon la revendication 5, dans lequel ladite première lentille (150) est configurée pour :

    - recueillir lesdites longueurs d'onde de la lumière Raman et
    - fournir lesdites longueurs d'onde de lumière Raman collectées audit filtre (170).

7. Système de diagnostic selon la revendication 5, comprenant

    - une deuxième lentille (151), cette deuxième lentille étant configurée pour :

        - recueillir lesdites longueurs d'onde de la lumière Raman, et
        - fournir lesdites longueurs d'onde de la lumière Raman audit filtre (170).

8. Système de diagnostic selon la revendication 7, comprenant

    - un dispositif optique (810) comprenant

        - au moins une fibre optique (910) configurée pour :

            - recevoir ladite lumière d'excitation ; et
            - transmettre ladite lumière d'excitation reçue à l'objet cible ; et

        - au moins une fibre optique (920) configurée pour :

            - recevoir lesdites longueurs d'onde de la lumière Raman ; et
            - diriger les longueurs d'onde de la lumière Raman reçues vers la deuxième lentille (151).

9. Système de diagnostic de la revendication 8, comprenant :

    - un masque, dans lequel ledit masque empêche des fibres optiques sélectionnées parmi la pluralité de fibres optiques recevant lesdites longueurs d'onde de la lumière Raman de recevoir lesdites longueurs d'onde de la lumière Raman.

10. Système de diagnostic selon l'une des revendications 8 ou 9, dans lequel ledit dispositif optique (810) comprend :

- une pluralité de fibres optiques (910, 920) disposées dans l'un des deux réseaux suivants : un réseau de fibres optiques unidimensionnel et un réseau de fibres optiques bidimensionnel.

11. Système de diagnostic selon la revendication 8, dans lequel ledit dispositif optique (810) comprend :

- une pluralité de fibres optiques (910, 920) disposées annulairement autour d'une fibre optique centrale, dans laquelle ladite fibre optique centrale est l'une des fibres suivantes : ladite fibre optique transmissive et ladite fibre optique réceptive.

12. Système de diagnostic selon l'une quelconque des revendications 3 à 4, comprenant :

- un premier laser (110) configuré pour :
- générer ladite première lumière, dans laquelle ledit premier laser est l'un des suivants : interne audit dispositif de sonde Raman (100) et externe audit dispositif de sonde Raman (100) ;

   - un second laser (120) configuré pour :

      - générer ladite seconde lumière, dans laquelle ledit second laser est l'un des suivants : interne audit dispositif de sonde Raman (100) et externe audit dispositif de sonde Raman (100).

13. Programme d'ordinateur comprenant des instructions pour amener le système de l'une quelconque des revendications 3 à 4 à déterminer la deuxième longueur d'onde d'excitation (210) en effectuant le procédé selon l'une quelconque des revendications 1 à 2.

Fig. 1A

Fig. 1B

FIG. 1C

FIG. 1D

Fig. 2

300

```
   ENTRY
     │
     ▼
┌──────────────┐
│  SELECT λ²ₚ   │──310
└──────────────┘
     │
     ▼
┌──────────────┐
│   SELECT     │
│ FINGERPRINT  │──320
│   REGION     │
└──────────────┘
     │
     ▼
┌──────────────┐
│  DETERMINE   │
│   LONGEST    │──330
│  MEASURED λ  │
└──────────────┘
     │
     ▼
┌──────────────┐
│ OBTAIN PEAK λ│
│OF SPECTROMETER│──340
│ QUANTUM EFF. │
└──────────────┘
     │
     ▼
┌──────────────┐
│ DETERMINE Vₚₒᵢ│──350
└──────────────┘
     │
     ▼
┌──────────────┐
│ DETERMINE λ'ₚ │──360
└──────────────┘
     │
     ▼
   EXIT
```

Fig. 3A

Fig. 3B

Fig. 4A

## 785 nm Excitation

| Wavenumber | λ on Spectrometer | QE % |
|---|---|---|
| 200 cm-1 | 797 nm | 96% |
| 2000 cm-1 | 931 nm | 70% |
| 3200 cm-1 | 1048 nm | 11% |
| 3600 cm-1 | 1094 nm | 1% |

Fig. 4B

Fig. 5A

### 785 nm Excitation

| Wavenumber | λ on Spectrometer | QE % |
|---|---|---|
| 200 cm-1 | 797 nm | 96% |
| 2000 cm-1 | 931 nm | 70% |
| 3200 cm-1 | 1048 nm | 11% |
| 3600 cm-1 | 1094 nm | 1% |

### 680 nm Excitation (Concatenation)

| Wavenumber | λ on Spectrometer | QE % |
|---|---|---|
| 200 cm-1 | 689 nm | 90% |
| 2000 cm-1 | 787 nm | 96% |
| 3200 cm-1 | 869nm | 93% |
| 3600 cm-1 | 900 nm | 82% |

81 X Increase

Fig. 5B

Fig. 6A

Fig. 6B

Fig. 6C

EP 4 127 678 B1

Fig. 6D

FIG. 7

FIG. 8

810

FIG. 9A

810

FIG. 9B

FIG. 10A

FIG. 10B

FIG. 10C

FIG. 10D

FIG. 10E

FIG. 10F

EP 4 127 678 B1

38

**REFERENCES CITED IN THE DESCRIPTION**

**Patent documents cited in the description**

- US 10359313 B1
- WO 2019220047 A1
- US 8085396 B
- US 9059555 B2
- US 9577409 B1
- US 7420996 B2

**Non-patent literature cited in the description**

- **YANG SONG**. *Novel Pressure-Induced Molecular Transformations Probed by In Situ Vibrational Spectroscopy*
- *Applications of Molecular Spectroscopy to Current Research in the Chemical and Biological Sciences*, 05 October 2016
- **J.B. COOPER** ; **S. MARSHALL** ; **R. JONES** ; **M. ABDELKA** ; **K.L. WISE**. Spatially Compressed Dual-Wavelength Excitation Raman Spectrometer. *Applied Optics*, 2014, vol. 53, 3333
- **J. KIEFER**. *Dual Wavelength Raman Spectroscopy: Improved Compactness and Spectral Resolution*, 16 October 2018, https://www.americanpharmaceuticalreview.com/Featured-Articles/354604-Dual-Wavelength-Raman-Spectroscopy-Improved-Compactness-and-Spectral-Resolution/ posted
- **J. KIEFER**. Raman Fusion Spectroscopy: Multiwavelength Excitation for Compact Devices. *SciX 2019*, 13 October 2019
- **BRUNEEL, JEAN-LUC** ; **BUFFETEAU, THIERRY** ; **DAUGEY, NICOLAS** ; **RODRIGUEZ, VINCENT**. *Apparatus and Method for Composite Raman Multispectral Spectrometry*